# EUROPEAN PATENT APPLICATION

(11) **EP 4 614 873 A1**
(43) Date of publication of application: **10.09.2025**
(21) Application number: 23884616.6
(22) Date of filing: 19.10.2023
(51) Int. Cl.: H04L 9/32, H04L 9/40

(54) **COMMUNICATION METHOD, APPARATUS AND SYSTEM**

(30) Priority: 06.11.2022 CN 202211381164
(71) Applicant: Huawei Technologies Co., Ltd., Shenzhen, Guangdong 518129 (CN)
(72) Inventor: GUO, Yanfei, Shenzhen, Guangdong 518129 (CN); CUI, Yang, Shenzhen, Guangdong 518129 (CN); WU, Yizhuang, Shenzhen, Guangdong 518129 (CN); LI, Lun, Shenzhen, Guangdong 518129 (CN); SUN, Taoran, Shenzhen, Guangdong 518129 (CN)
(74) Representative: Isarpatent
(86) International application number: PCT/CN2023/125430
(87) International publication number: WO 2024/093684

(57) **Abstract**

Embodiments of this application provide a communication method and an apparatus. The method includes: A second entity receives a request message from a network function entity, where the request message includes an initial certificate signed by a first entity for the network function entity and identity information of the network function entity, and the first entity is a trusted entity of the second entity; verifies consistency between the initial certificate signed by the first entity for the network function entity and the identity information of the network function entity; and signs an end entity certificate for the network function entity when a verification result is that the verification succeeds. According to the method, the second entity may refuse to sign the end entity certificate based on inconsistency between the initial certificate and an identity forged by an attacker or an identity of a malicious network function entity, to prevent the attacker or the malicious network function entity from obtaining the end entity certificate, using the end entity certificate to communicate with another network function entity in a network, and stealing information from the another network function entity, thereby improving network communication security.

## Description

### CROSS-REFERENCE TO RELATED APPLICATIONS

This application claims priority to Chinese Patent Application No. 202211381164.4, filed with the China National Intellectual Property Administration on November 6, 2022 and entitled "COMMUNICATION METHOD, APPARATUS, AND SYSTEM", which is incorporated herein by reference in its entirety.

### TECHNICAL FIELD

This application relates to the communication field, and more specifically, to a communication method, an apparatus, and a system in the security field.

### BACKGROUND

In an existing network, information security is ensured between different entities configured to implement network functions (which may be briefly referred to as network function entities (network function entity)) through information transfer and verification, thereby implementing network security. When a network entity counterfeits another network entity, information about the counterfeited network entity may be stolen, reducing network security.

### SUMMARY

This application provides a communication method, an apparatus, a system, and the like, to improve network security.

According to a first aspect, a communication method is provided, and includes: learning that a network function entity requests an initial certificate, and signing the initial certificate for the network function entity; and learning that the network function entity or another function entity requests to revoke the initial certificate, and recording a status of the initial certificate as revoked.

According to the foregoing solution, the initial certificate signed for the network function entity may be revoked in time based on a request of the network function entity or the another function entity. In other words, a status in which the initial certificate can be queried is recorded as revoked. Therefore, when a private key of the network function entity is leaked, and an attacker or a malicious network function entity requests an end entity certificate by using the initial certificate of the network function entity, because the status of the initial certificate is recorded as revoked, the attacker or the malicious network function entity does not obtain the end entity certificate. Therefore, the attacker or the malicious network function entity cannot use the end entity certificate to communicate with another network function entity in a network, and steal information from the another network function entity, thereby improving network communication security.

With reference to the first aspect, in some implementations of the first aspect, the learning that a network function entity requests an initial certificate includes: receiving a first request message from the network function entity, where the first request message is used to request the initial certificate, and the first request message includes identity information of the network function entity and a first public key; and the signing the initial certificate for the network function entity includes: signing the initial certificate for the network function entity when verification performed based on the identity information of the network function entity succeeds. The method further includes: sending a first response message to the network function entity, where the first response message includes the initial certificate, and the initial certificate includes the identity information of the network function entity and the first public key.

With reference to the first aspect, in some implementations of the first aspect, the initial certificate is signed by a certificate signing entity, the initial certificate further includes identification information of the initial certificate, and the identification information is unique in initial certificates signed by the certificate signing entity, so that each initial certificate can be accurately located based on the identification information.

With reference to the first aspect, in some implementations of the first aspect, the learning that the network function entity or another function entity requests to revoke the initial certificate includes: receiving a revocation request message from the network function entity or the another function entity, where the revocation request message is used to request to revoke the initial certificate.

With reference to the first aspect, in some implementations of the first aspect, the revocation request message includes the identification information of the initial certificate. Further, before the initial certificate is revoked, the method further includes: determining, based on the identification information of the initial certificate, the initial certificate that the network function entity requests to revoke. Therefore, based on the identification information that is of the initial certificate and that is included in the revocation request message, the initial certificate that needs to be revoked may be accurately located, and then revoked in time.

With reference to the first aspect, in some implementations of the first aspect, the revocation request message includes the identity information of the network function entity.

With reference to the first aspect, in some implementations of the first aspect, before the status in which the initial certificate can be queried is recorded as revoked, the method further includes: determining the identity information of the network function entity based on a point-to-point communication tunnel with the network function entity, so that related identity information can also be obtained when the revocation request message does not include the identification information of the initial certificate or the identity information of the network function entity.

With reference to the first aspect, in some implementations of the first aspect, before the status in which the initial certificate can be queried is recorded as revoked, the method further includes: determining the initial certificate of the network function entity based on the identity information of the network function entity. This implementation may bring the following advantages: In a scenario in which one network function entity requests a plurality of initial certificates, the plurality of initial certificates of the network function entity may be located at a time, so that a processing speed can be improved, and a processing latency can be reduced.

With reference to the first aspect, in some implementations of the first aspect, the another function entity and the first certificate signing entity are located in different security domains, and the revocation request message further includes a signature of the another function entity, for the first certificate signing entity to verify the revocation request message, to ensure message transmission security.

With reference to the first aspect, in some implementations of the first aspect, recording the status of the initial certificate as revoked may be considered as recording revocation of the initial certificate in a published information source, so that another network function entity performs query as required. For example, the recording a status of the initial certificate as revoked includes: adding the initial certificate to a certificate revocation list CRL, or recording the status of the initial certificate in an online certificate status protocol OCSP responder as revoked. According to the foregoing solution, the status of the initial certificate is recorded as revoked by using the CRL or the OCSP responder, and the status of the initial certificate can be found. Therefore, when a private key of the network function entity is leaked, and an attacker or a malicious network function entity requests an end entity certificate by using the initial certificate of the network function entity, each certificate signing entity configured to sign the end entity certificate and the network function entity may obtain a status record of the initial certificate in time, to refuse the request of the attacker or the malicious network function entity in time, thereby improving network communication security.

With reference to the first aspect, in some implementations of the first aspect, the adding the initial certificate to a certificate revocation list CRL includes: obtaining, from the initial certificate, an address of a function entity configured to maintain the certificate revocation list CRL, and then sending a first update request message to the function entity that maintains the CRL, to add the initial certificate to the CRL, where the first update request message includes the identification information of the initial certificate.

With reference to the first aspect, in some implementations of the first aspect, the recording the status of the initial certificate in an OCSP responder as revoked includes: sending a second update request message to the online certificate status protocol OCSP responder to update the status of the initial certificate to revoked, where the second update request message includes the identification information of the initial certificate.

With reference to the first aspect, in some implementations of the first aspect, the initial certificate further includes usage information, and the usage information indicates a purpose of an end entity certificate that the initial certificate can be used to request. The initial certificate is used to request an end entity certificate for a specific purpose. This can prevent an attacker or a malicious network function entity from abusing the initial certificate to request an end entity certificate other than the end entity certificate for the specific purpose or using the end entity certificate to exercise rights beyond the permission scope, thereby improving network communication security.

According to a second aspect, a communication method is provided, and includes: A network function entity obtains an initial certificate from a certificate signing entity. After requesting an end entity certificate based on the initial certificate, the network function entity triggers the certificate signing entity to record a status of the initial certificate as revoked.

According to the foregoing solution, after requesting the end entity certificate by using the initial certificate, the network function entity triggers the certificate signing entity in time to record the status of the initial certificate as revoked, so that each certificate signing entity in a network can update and query the status of the initial certificate in time, and therefore an attacker or a malicious network function entity cannot obtain the end entity certificate by using the initial certificate, thereby improving network communication security.

With reference to the second aspect, in some implementations of the second aspect, after the network function entity requests the end entity certificate based on the initial certificate, the method further includes: The network function entity verifies the end entity certificate; and when a verification result is that the verification succeeds, the network function entity triggers the certificate signing entity to record the status of the initial certificate as revoked, to ensure that the end entity certificate requested by the network function entity based on the initial certificate is available and is not affected by update of the status of the initial certificate.

With reference to the second aspect, in some implementations of the second aspect, the triggering the certificate signing entity to record a status of the initial certificate as revoked includes: The network function entity sends a revocation request message to the certificate signing entity, where the revocation request message is used to request the certificate signing entity to revoke the initial certificate. Therefore, after requesting the end entity certificate by using the initial certificate, the network function entity directly requests the certificate signing entity to revoke the initial certificate. A procedure is simple, and the initial certificate can be revoked in time.

With reference to the second aspect, in some implementations of the second aspect, the end entity certificate is received by the network function entity from a second certificate signing entity, and the triggering the certificate signing entity to record a status of the initial certificate as revoked includes: The network function entity sends an indication message to the second certificate signing entity, to trigger the second certificate signing entity to request the certificate signing entity to record the status of the initial certificate as revoked, where the indication message indicates that the network function entity has completed enrollment of the end entity certificate. An advantage of this implementation is that the second certificate signing entity may learn of an enrollment status of the end entity certificate in time, to perform corresponding subsequent processing.

With reference to the second aspect, in some implementations of the second aspect, the end entity certificate includes a public key, and the indication message is signed by using a private key corresponding to the public key, to support verification of a message source, thereby improving network communication security.

With reference to the second aspect, in some implementations of the second aspect, that a network function entity obtains an initial certificate from a certificate signing entity includes: The network function entity obtains the initial certificate from the certificate signing entity through a certificate management network function entity, so that the certificate management network function entity manages the network function entity, and a processing process of the network function entity is simplified.

According to a third aspect, a communication method is provided, and includes: A second certificate signing entity receives a request message from a network function entity, where the request message includes an initial certificate signed by a first certificate signing entity for the network function entity and identity information of the network function entity, and the first certificate signing entity is a trusted entity of the second certificate signing entity. The second certificate signing entity verifies consistency between the initial certificate signed by the first certificate signing entity for the network function entity and the identity information of the network function entity, and further signs an end entity certificate for the network function entity when a verification result is that the verification succeeds. Optionally, the initial certificate signed by the first certificate signing entity for the network function entity includes identity information of the network function entity, and the verifying consistency between the initial certificate signed by the first certificate signing entity for the network function entity and the identity information of the network function entity includes: verifying whether the identity information of the network function entity that is included in the initial certificate is consistent with the identity information of the network function entity that is included in the request message.

According to the foregoing solution, the second certificate signing entity verifies consistency between the initial certificate used by the network function entity to request the end entity certificate and an identity of the network function entity, and signs the end entity certificate for the network function entity when a verification result is that the verification succeeds. Therefore, when a private key of the network function entity is leaked, and an attacker or a malicious network function entity requests the end entity certificate by using the initial certificate of the network function entity, the second certificate signing entity refuses to sign the end entity certificate based on inconsistency between the initial certificate and an identity forged by the attacker or an identity of the malicious network function entity. Therefore, the attacker or the malicious network function entity cannot use the end entity certificate to communicate with another network function entity in a network, and steal information from the another network function entity, thereby improving network communication security.

With reference to the third aspect, in some implementations of the third aspect, the initial certificate further includes usage information, and the usage information indicates a purpose of an end entity certificate that the initial certificate can be used to request; the request message further includes second usage information, and the second usage information indicates a purpose of the end entity certificate requested by the network function entity; the method further includes: verifying consistency between the usage information and the second usage information; and the signing an end entity certificate for the network function entity when a verification result is that the verification succeeds includes: signing the end entity certificate for the network function entity when the verification result is that the verification succeeds, and a verification result of the consistency between the usage information and the second usage information is that the verification succeeds.

According to the foregoing solution, the second certificate signing entity signs the end entity certificate when the usage information included in the initial certificate is consistent with the second usage information included in the request message. Therefore, assuming that the initial certificate of the network function entity is used to request an end entity certificate whose purpose is A, the usage information included in the initial certificate indicates the purpose A. When a private key of the network function entity is leaked, an attacker or a malicious network function entity uses the initial certificate of the network function entity to request an end entity certificate whose purpose is B. In this case, the second usage information included in the request message indicates the purpose B. The second certificate signing entity may determine that the usage information is inconsistent with the second usage information, and therefore refuse to sign the end entity certificate, to prevent the attacker or the malicious network function entity from abusing the initial certificate to request an end entity certificate other than an end entity certificate for a specific purpose and using the end entity certificate to exercise rights beyond the permission scope, thereby improving network communication security.

With reference to the third aspect, in some implementations of the third aspect, the method further includes: The second certificate signing entity sends a revocation request message to the first certificate signing entity, where the revocation request message is used to request to revoke the initial certificate; or before the second certificate signing entity sends the revocation request message to the first certificate signing entity, the method further includes: The second certificate signing entity determines an address of the first certificate signing entity used to revoke the initial certificate; and the second certificate signing entity sends the revocation request message to the first certificate signing entity based on the address. Therefore, when the second certificate signing entity can determine the address of the first certificate signing entity, the second certificate signing entity may directly send the revocation request message to the first certificate signing entity based on the address, thereby simplifying a procedure.

With reference to the third aspect, in some implementations of the third aspect, that the second certificate signing entity sends a revocation request message to the first certificate signing entity includes: The second certificate signing entity sends the revocation request message to the first certificate signing entity through another function entity, where the another function entity is configured to: determine an address of the first certificate signing entity based on identity information of the first certificate signing entity that is provided by the second certificate signing entity, and forward the revocation request message from the second certificate signing entity to the first certificate signing entity based on the address of the first certificate signing entity. If the second certificate signing entity does not store a correspondence between identity information and an address of a certificate signing entity, the second certificate signing entity provides the identity information of the first certificate signing entity to the another function entity, so that the another function entity determines the address of the first certificate signing entity based on the identity information, and forwards the revocation request message to the first certificate signing entity. In this way, processing complexity of the second certificate signing entity can be reduced, and storage space of the second certificate signing entity can be saved.

With reference to the third aspect, in some implementations of the third aspect, before the second certificate signing entity sends the revocation request message to the first certificate signing entity, the method further includes: The second certificate signing entity signs the revocation request message. Therefore, the first certificate signing entity may verify the signature. If the verification succeeds, the first certificate signing entity may determine that the revocation request message is sent by the second certificate signing entity, and the revocation request message is complete and accurate. In this way, the second certificate signing entity signs the revocation request message, so that it can be ensured that the initial certificate is normally revoked, thereby improving network communication security.

With reference to the third aspect, in some implementations of the third aspect, before the second certificate signing entity sends the revocation request message to the first certificate signing entity, the method further includes: The second certificate signing entity receives a response message from the network function entity, where the response message indicates that the network function entity has completed enrollment of the end entity certificate. In this way, the second certificate signing entity may learn of an enrollment status of the end entity certificate in time, and then request the first certificate signing entity in time to revoke the initial certificate.

With reference to the third aspect, in some implementations of the third aspect, after the signing an end entity certificate for the network function entity, the method further includes: The second certificate signing entity marks a status of the initial certificate as used. Further, that the second certificate signing entity marks a status of the initial certificate as used includes: The second certificate signing entity adds a serial number of the initial certificate to a list, where the list includes a serial number of an initial certificate used by the second certificate signing entity to sign an end entity certificate, so that the second certificate signing entity can find the status of the initial certificate before subsequently determining whether to sign the end entity certificate.

With reference to the third aspect, in some implementations of the third aspect, the second certificate signing entity allows another network entity to query the list. In this way, when a private key of the network function entity is leaked, and an attacker or a malicious network function entity requests an end entity certificate by using the initial certificate of the network function entity, each certificate signing entity configured to sign the end entity certificate and the network function entity may obtain a status record of the initial certificate in time, to refuse the request of the attacker or the malicious network function entity in time, thereby improving network communication security.

With reference to the third aspect, in some implementations of the third aspect, the signing an end entity certificate for the network function entity when a verification result is that the verification succeeds includes: signing the end entity certificate for the network function entity when the verification result is that the verification succeeds, and it is determined that the status of the initial certificate is not marked as used, to avoid signing different end entity certificates based on a same initial certificate, thereby improving network communication security.

With reference to the third aspect, in some implementations of the third aspect, the initial certificate further includes second information, the second information is information generated by the first certificate signing entity based on first information and the identity information of the network function entity, and the method further includes: The second certificate signing entity sends the first information to the network function entity, so that the initial certificate signed by the first certificate signing entity for the network function entity includes the second information; and the signing an end entity certificate for the network function entity when a verification result is that the verification succeeds includes: signing the end entity certificate for the network function entity when the verification result is that the verification succeeds, and the second information included in the initial certificate is consistent with the information generated by the second certificate signing entity based on the first information and the identity information of the network function entity.

According to the foregoing solution, the second certificate signing entity allocates the first information to the network function entity, and more accurately determines, by using the information, whether to sign the end entity certificate for the network function entity.

With reference to the third aspect, in some implementations of the third aspect, before the second certificate signing entity sends the first information to the network function entity, the method includes: The second certificate signing entity learns that the network function entity requests an end entity certificate, and allocates the first information to the network function entity. The second certificate signing entity may allocate the first information to the network function entity as triggered by the network function entity. A procedure is simple, and resource allocation is reduced.

With reference to the third aspect, in some implementations of the third aspect, that the second certificate signing entity sends the first information to the network function entity includes: The second certificate signing entity sends the first information to the network function entity via a certificate management network function entity, so that the certificate management network function entity manages the network function entity, and a processing process of the network function entity is simplified.

According to a fourth aspect, a communication method is provided, and includes: A first certificate signing entity receives a first request message from a network function entity, where the first request message includes identity information of the network function entity and first information; and the first certificate signing entity signs an initial certificate for the network function entity, where the initial certificate includes second information, and the second information is information generated based on the first information and the identity information of the network function entity, and is used for verification performed before a second certificate signing entity signs an end entity certificate for the network function entity.

According to the foregoing solution, the first certificate signing entity generates the second information based on the first information provided by the second certificate signing entity and the identity information of the network function entity, so that the second certificate authority entity more accurately determines whether to sign the end entity certificate for the network function entity.

According to a fifth aspect, a communication method is provided, and includes: A network function entity receives first information from a second certificate signing entity; the network function entity sends a request message to a first certificate signing entity, where the request message is used to request an initial certificate, and the request message includes identity information of the network function entity and the first information; the network function entity receives, from the first certificate signing entity, an initial certificate signed by the first certificate signing entity for the network function entity, where the initial certificate includes second information, and the second information is information generated based on the first information and the identity information of the network function entity, and is used for verification performed before the second certificate signing entity signs an end entity certificate for the network function entity; the network function entity sends, to the second certificate signing entity, a message used to request the end entity certificate, where the message includes the initial certificate; and the network function entity receives the end entity certificate from the second certificate signing entity.

According to the foregoing solution, the network function entity sends, to the first certificate signing entity, the first information provided by the second certificate signing entity for the network function entity, so that the first certificate signing entity generates the second information based on the first information and the identity information of the network function entity, and the second certificate signing entity verifies the second information before determining whether to sign the end entity certificate, to prevent an attacker or a malicious network function entity from requesting the end entity certificate, using the end entity certificate to communicate with another network function entity in a network, and stealing information from the another network function entity, thereby improving network communication security.

With reference to the fifth aspect, in some implementations of the fifth aspect, that a network function entity receives first information from a second certificate signing entity includes: The network function entity sends a message to trigger the second certificate signing entity to provide the first information, so that the second certificate signing entity can allocate the first information to the network function entity as required. A procedure is simple, and resource allocation is reduced.

According to a sixth aspect, an apparatus is provided, and includes a module configured to implement any one of the foregoing methods.

According to a seventh aspect, an apparatus is provided, and includes a processor, a memory, and a transceiver. The memory is configured to store instructions, when the instructions are used by the processor, the processor is configured to implement any one of the foregoing methods, and the transceiver is configured to: receive and/or send a signal.

According to an eighth aspect, a computer-readable storage medium is provided. The computer-readable storage medium includes instructions, and when the instructions are run a computer, the computer is enabled to perform any one of the foregoing methods.

According to a ninth aspect, a computer program product including instructions is provided. When the instructions are on a computer, the computer is enabled to perform any one of the foregoing methods.

According to a tenth aspect, a communication system is provided, and includes one or more apparatuses configured to perform any one of the foregoing methods.

According to an eleventh aspect, a communication method is provided. A first certificate signing entity learns that a network function entity requests an initial certificate, and signs the initial certificate for the network function entity; the network function entity obtains an end entity certificate from a second certificate signing entity based on the initial certificate; the first certificate signing entity receives a revocation request message from the network function entity or another function entity, where the revocation request message is used to request to revoke the initial certificate; and the first certificate signing entity records a status of the initial certificate as revoked.

With reference to the eleventh aspect, in some implementations of the eleventh aspect, the method further includes: The first certificate signing entity determines, based on identification information of the initial certificate or identity information of the network function entity, the initial certificate that the network function entity requests to revoke.

With reference to the eleventh aspect, in some implementations of the eleventh aspect, the recording a status of the initial certificate as revoked includes: The first certificate signing entity adds the initial certificate to a certificate revocation list CRL; or the first certificate signing entity records the status of the initial certificate in an online certificate status protocol OCSP responder as revoked.

With reference to the eleventh aspect, in some implementations of the eleventh aspect, that the network function entity obtains an end entity certificate from a second certificate signing entity based on the initial certificate includes: The network function entity sends a request message to the second certificate signing entity, where the request message includes the initial certificate and the identity information of the network function entity, and the first certificate signing entity is a trusted entity of the second certificate signing entity; and the second certificate signing entity verifies consistency between the initial certificate signed by the first certificate signing entity for the network function entity and the identity information of the network function entity, and signs an end entity certificate for the network function entity when a verification result is that the verification succeeds.

With reference to the eleventh aspect, in some implementations of the eleventh aspect, the initial certificate signed by the first certificate signing entity for the network function entity includes identity information of the network function entity, and the verifying consistency between the initial certificate signed by the first certificate signing entity for the network function entity and the identity information of the network function entity includes: verifying whether the identity information of the network function entity that is included in the initial certificate is consistent with the identity information of the network function entity that is included in the request message.

With reference to the eleventh aspect, in some implementations of the eleventh aspect, the initial certificate further includes usage information, and the usage information indicates a purpose of an end entity certificate that the initial certificate can be used to request; the request message further includes second usage information, and the second usage information indicates a purpose of the end entity certificate requested by the network function entity; the method further includes: verifying consistency between the usage information and the second usage information; and the signing an end entity certificate for the network function entity when a verification result is that the verification succeeds includes: signing the end entity certificate for the network function entity when the verification result is that the verification succeeds, and a verification result of the consistency between the usage information and the second usage information is that the verification succeeds.

With reference to the eleventh aspect, in some implementations of the eleventh aspect, after the network function entity obtains the end entity certificate from the second certificate signing entity based on the initial certificate, the method further includes: The network function entity verifies the end entity certificate; and the network function entity sends the revocation request message to the certificate signing entity when a verification result is that the verification succeeds.

According to a twelfth aspect, a chip is provided. The chip includes a processor and a communication interface. The processor reads, through the communication interface, instructions stored in a memory, to perform any one of the foregoing methods. Optionally, in an implementation, the chip may further include the memory. The memory stores the instructions, and the processor is configured to execute the instructions stored in the memory. When the instructions are executed, the processor is configured to perform any one of the foregoing methods.

### BRIEF DESCRIPTION OF DRAWINGS

FIG. 1 is a diagram of a network architecture 100 according to this application;
FIG. 2 is a diagram of a PKI system;
FIG. 3 is a diagram of an example of a network architecture to which an embodiment of this application is applied;
FIG. 4 is a schematic flowchart of a communication method 400 according to an embodiment of this application;
FIG. 5 is a diagram of another example of a network architecture to which an embodiment of this application is applied;
FIG. 6 is a schematic flowchart of another communication method 600 according to an embodiment of this application;
FIG. 7 is a schematic flowchart of still another communication method 700 according to an embodiment of this application;
FIG. 8 is a schematic flowchart of yet another communication method 800 according to an embodiment of this application;
FIG. 9 is a schematic block diagram of a communication apparatus 900 according to an embodiment of this application;
FIG. 10 is a schematic block diagram of another communication apparatus 1000 according to an embodiment of this application; and
FIG. 11 is a diagram of a chip system 1100 according to an embodiment of this application.

### DESCRIPTION OF EMBODIMENTS

The following describes technical solutions of this application with reference to accompanying drawings.

Various communication systems involve how to ensure and improve network security. For example, a common operator network, also referred to as a public land mobile network (public land mobile network, PLMN), is a network established and operated by a government or an operator approved by the government for the purpose of providing a land mobile communication service for the public, is mainly a public network on which a mobile network operator (mobile network operator, MNO) provides a mobile broadband access service for a user, and has a high requirement on network security. In embodiments of this application, examples may be provided based on a PLMN or a network that meets a requirement of the 3rd generation partnership project (3rd generation partnership project, 3GPP) standard, which is briefly referred to as a 3GPP network. The 3GPP network includes but is not limited to a 5th generation (5th generation, 5G) mobile communication network, a 4th generation mobile communication network, and another future communication system, for example, a 6th generation mobile communication network.

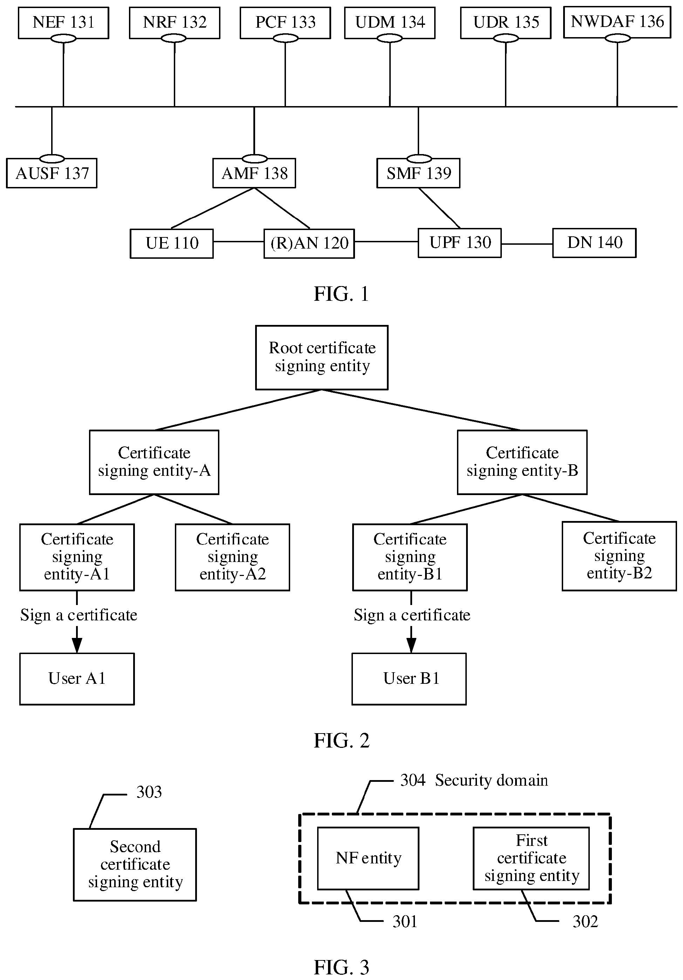

FIG. 1 is a diagram of a network architecture in which a network function NF is located according to an embodiment of this application. A 5G network based on a service-based architecture (service-based architecture, SBA) in a 3GPP non-roaming scenario is used as an example to provide an example of the NF. As shown in FIG. 1, the network architecture includes three parts: a terminal device 110, a data network (data network, DN) 140, and an operator network part.

The operator network part may include but is not limited to a (radio) access network ((radio) access network, (R)AN) 120 and a core network (core network, CN) part. The CN part may include but is not limited to the following network functions (network function, NF): a user plane function (user plane function, UPF) 130, a network exposure function (network exposure function, NEF) 131, a network repository function (network repository function, NRF) 132, a policy control function (policy control function, PCF) 133, unified data management (unified data management, UDM) 134, a unified data repository (unified data repository, UDR) 135, a network data analytics function (network data analytics function, NWDAF) 136, an authentication server function (authentication server function, AUSF) 137, an access and mobility management function (access and mobility management function, AMF) 138, and a session management function (session management function, SMF) 139.

An implementation form of the network function NF may be a physical entity in a hardware device, or may be a software instance running on dedicated hardware, or may be a virtualization function instantiated on a shared platform (for example, a cloud platform). In a form, the network functions NFs may be independent devices, or may be integrated into a same device to implement different functions. It should be noted that, regardless of whether the NF is implemented by hardware or software, network security may be reduced when the NF is counterfeited.

The foregoing network functions NFs, such as the NEF 131, ..., and the SMF 139, may be deployed in an NF entity (entity), that is, a network entity (network entity, NE) in a network. In addition, FIG. 1 describes only some network functions as an example, and NF entities described below are not limited to the network functions shown in FIG. 1.

It should be understood that the foregoing network architecture applied to embodiments of this application is merely a network architecture described from a perspective of a service-based architecture, and a network architecture applicable to embodiments of this application is not limited thereto. Any network architecture that can implement functions of the foregoing NF entities is applicable to embodiments of this application. In addition, the foregoing names are defined only for ease of distinguishing between different functions, and should not constitute any limitation on this application. This application does not exclude a possibility that another name is used in a 5G network and another future network. For example, in a 6G network, some or all of the NFs may still use terms in 5G, or may use other names.

A core network based on a service-based architecture SBA shown in FIG. 1 is used as an example, and NF entities interact with each other based on a service-based interface. One NF entity may invoke a service provided by another NF entity. The two NF entities may directly interact with each other, or may indirectly interact with each other through another NF entity. A network connection may be established between the NF entities by using a technology like the network domain security for internet protocol (Internet protocol, IP) based protocol (network domain security for IP based protocols, NDS/IP) or transport layer security (transport layer security, TLS). The NDS/IP and TLS technologies herein are both based on a public key infrastructure (public key infrastructure, PKI).

The PKI is an infrastructure established by using an asymmetric cryptography (asymmetric cryptography) algorithm and technology to provide security services, and is used to sign (sign) and issue (issue) a digital certificate for identity information of a user and a public key of the user, which is briefly referred to as a certificate (certificate), and is used for user identity verification during communication.

The public key of the user in the certificate is a public key in a pair of keys generated by the user based on the asymmetric cryptography algorithm. The other key is confidential and is private to the user, and is referred to as a private key. The public key corresponds to the private key, and may be used to implement a digital signature. For example, a user A signs data. A specific implementation is as follows: The user A processes the data based on the asymmetric cryptography algorithm by using a private key, or the user A first generates digest information based on the data, and then processes the digest information based on the asymmetric cryptography algorithm by using a private key. A result of the foregoing processing is a digital signature of the user A on the data, which is briefly referred to as a signature. Correspondingly, after receiving the data from the user A and the signature of the user A on the data, a user B verifies the signature. Specifically, the user B obtains a public key of the user A from the certificate of the user A, processes the signature based on the asymmetric cryptography algorithm by using the public key, and verifies whether the processed data is consistent with the data received by the user B from the user A, or whether the processed data is consistent with digest information generated based on the received data. If the processed data is consistent with the data received by the user B from the user A or the digest information generated based on the received data, the verification succeeds; and the user B may determine that the signature of the user A is valid, the data is sent by the user A instead of being counterfeited by another person, and the user B may determine that the received data is complete and accurate. An asymmetric cryptography algorithm used by the user A to generate the public key and the private key, an asymmetric cryptography algorithm used by the user A to sign the data, and an asymmetric cryptography algorithm used by the user B to verify the signature are the same. The user A/the user B inputs data into a digest algorithm to generate digest information, and digest algorithms used by the user A and the user B are the same. The digest algorithms used by the user A and the user B are not limited in embodiments of this application. For example, the digest algorithm may be a secure hash algorithm (secure hash algorithm, SHA), or may be a message digest (message digest, MD). A manner of determining, by the user A and the user B, to use a same digest algorithm is not limited in embodiments of this application, for example, may be defined in a protocol.

In a PKI system, a certificate signing entity is configured to sign a certificate, and needs to be authoritative. The PKI system may further include a certificate enrollment entity, configured to request, after obtaining and performing verification on a user identity, the certificate signing entity to sign a certificate. The certificate enrollment entity may be a function integrated in the certificate signing entity, or may be independently deployed. The certificate signing entity may also be referred to as a certificate authority (certificate authority, CA), a certification authority, a certificate issuing entity, a certificate issuing network element, or the like. The certificate enrollment entity may also be referred to as a registration authority (registration authority, RA), a certificate enrollment network element, or the like. The name should not constitute any limitation on embodiments of this application.

That the certificate signing entity signs a certificate for a user specifically means that the certificate signing entity signs certificate data such as a user identity and a public key of the user by using a private key of the certificate signing entity, and sends, to the user, a certificate chain of the certificate signing entity and a certificate that includes the certificate data and the signature. In a possible case, the certificate of the certificate signing entity is signed by the certificate signing entity. In this case, the certificate chain of the certificate signing entity is the certificate of the certificate signing entity. In another possible case, the certificate of the certificate signing entity is signed by another certificate signing entity. For example, to facilitate certificate management, the PKI system includes one or more root certificate signing entities and a plurality of layers of sub-certificate signing entities in each root certificate signing entity. The root certificate signing entity signs certificates for the root certificate signing entity and a lower-layer sub-certificate signing entity, the lower-layer sub-certificate signing entity signs a certificate for a lower-layer certificate signing entity, ..., and finally, a last-layer sub-certificate signing entity signs a certificate for the user. As shown in FIG. 2, a root certificate signing entity signs certificates for a certificate signing entity-A and a certificate signing entity-B, the certificate signing entity-A signs certificates for a certificate signing entity-A1 and a certificate signing entity-A2, and the certificate signing entity-A1 signs a certificate for a user A1. In this case, the certificate chain of the certificate signing entity is an ordered certificate list. The 1^{st} certificate in the certificate chain is the certificate of the certificate signing entity, each certificate except the last certificate is signed by a holder of a next certificate, and the last certificate in the certificate chain is a certificate of the root certificate signing entity. The last certificate in the certificate chain of the certificate signing entity may also be referred to as a root certificate of the certificate signing entity. For example, in FIG. 2, a certificate chain of the certificate signing entity-A1 is {certificate signing entity-A1 certificate, certificate signing entity-A certificate, root certificate signing entity certificate}, and a certificate chain of a certificate signing entity-B1 is {certificate signing entity-B1 certificate, certificate signing entity-B certificate, root certificate signing entity certificate}.

The certificate chain of the certificate signing entity is used by another user to verify whether a certificate of the user is signed by a trusted certificate signing entity. Specifically, for two parties that need to communicate and interact with each other, either party needs to verify whether a certificate chain of the other party includes a certificate downloaded and installed by the party. If the certificate chain of the other party includes the certificate downloaded and installed by the party, it may be determined that a certificate of the other party is signed by a trusted certificate signing entity, thereby determining that an identity of the other party is trusted. For example, in FIG. 2, a certificate of the user A1 is signed by the certificate signing entity-A1, and a user B1 determines that a certificate chain of the certificate signing entity-A1 includes a certificate of the root certificate signing entity that is downloaded and installed by the user B1, to determine that the certificate of the user A1 is signed by a trusted certificate signing entity, thereby determining that an identity of the user A1 is trusted.

In an SBA core network using security technologies such as PKI-based NDS/IP and TLS, certificates need to be configured for NF entities that communicate with each other, and bidirectional authentication is completed based on the certificates before communication. Therefore, to communicate with another NF entity in an operator domain, after initial instantiation, the NF entity needs to request an end entity certificate from an operator certificate signing entity or a trusted third-party public certificate signing entity. Before signing a certificate for the NF entity, the operator certificate signing entity/public certificate signing entity needs to ensure that the NF entity has a trusted identity and has the right to request an end entity certificate, to avoid a case in which an attacker obtains a valid certificate, uses the certificate to communicate with another NF entity in a network, and steals information from the another NF entity, reducing network security. In addition, a procedure of requesting the end entity certificate needs to be protected, to avoid a case in which the operator certificate signing entity/public certificate signing entity signs an incorrect certificate because a request parameter is tampered with, affecting communication and interaction between the NF entities. However, in some scenarios, the operator certificate signing entity/public certificate signing entity and the NF entity are in different security domains (security domain), and cannot directly verify the identity of the NF entity. For example, a core network may include NF entities from a plurality of device vendors. The NF entities from the different device vendors form different security domains, which may also be referred to as trust domains (trust domain). A security level and a configured security service in a security domain are usually the same. NF entities in a same security domain trust each other. However, the operator certificate signing entity/ public certificate signing entity and an NF entity that needs to request an end entity certificate are in different security domains, and cannot directly verify the identity.

In a possible implementation, a security domain in which the NF entity is located further includes a private certificate signing entity, configured to sign an initial certificate for the NF entity in the security domain, and the operator certificate signing entity/public certificate signing entity downloads and installs a root certificate of the private certificate signing entity. The NF entity first requests an initial certificate from the private certificate signing entity, and then sends, to the operator certificate signing entity/public certificate signing entity, the initial certificate signed by the private certificate signing entity, a certificate chain of the private certificate signing entity, and a signature that is on the initial certificate and the certificate chain of the private certificate signing entity and that is obtained by using the private key of the NF entity, to request an end entity certificate from the operator certificate signing entity/public certificate signing entity. The operator certificate signing entity/public certificate signing entity verifies that the initial certificate is signed by the private certificate signing entity and the certificate chain of the private certificate signing entity includes a certificate downloaded and installed by the operator certificate signing entity/public certificate signing entity, and the operator certificate signing entity/public certificate signing entity can successfully verify the signature by using a public key in the initial certificate, to determine that the identity of the NF entity is trusted and the request parameter is not tampered with.

In another possible implementation, a security domain may further include a certificate management NF entity (certification management NF entity), and the certificate management NF entity is configured to request a certificate on behalf of another NF entity, and may be further configured to distribute, to the another NF entity, a certificate signed by the private certificate signing entity, the operator certificate signing entity, or the public certificate signing entity. It should be understood that the certificate management NF entity may have another name, and the name should not constitute any limitation on embodiments of this application.

It should be noted that leakage of the private key of the NF entity may reduce network security. For example, if an attacker obtains a private key of an NF entity, the attacker may obtain a signature of the NF entity based on the private key, and use a signature of the NF entity, an initial certificate signed by a private certificate signing entity for the NF entity, and a certificate chain of the private certificate signing entity to counterfeit the NF entity to request an end entity certificate from an operator certificate signing entity/public certificate signing entity. The operator certificate signing entity/public certificate signing entity considers that the attacker is trusted because verification on the signature, the initial certificate, and the certificate chain of the private certificate signing entity succeeds, and signs an end entity certificate for the attacker. Consequently, the attacker can use the end entity certificate to communicate with another NF entity in a network, and steal information from the another NF entity, reducing network security.

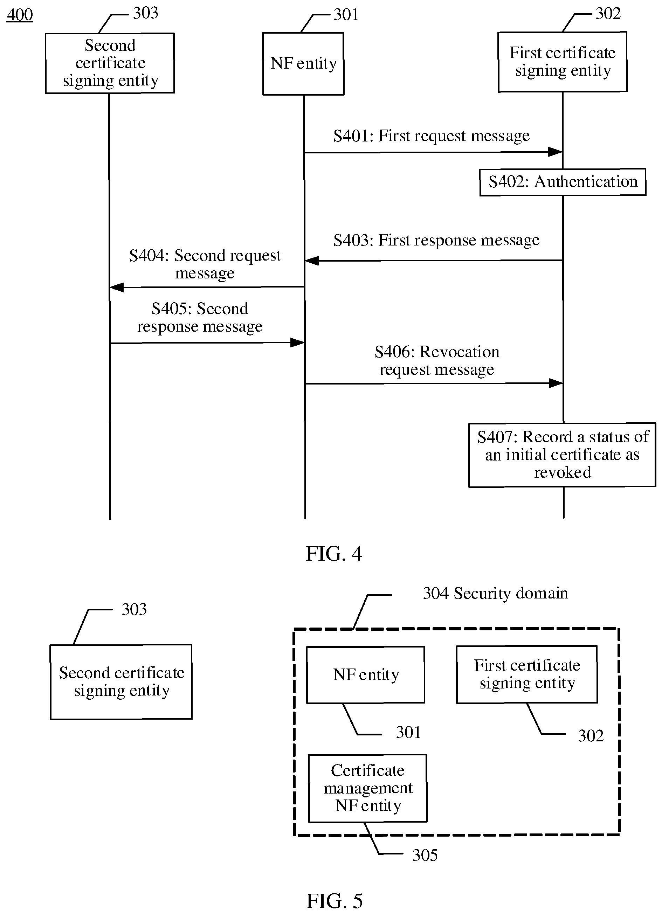

Embodiments of this application may be applied to a plurality of systems, as shown in FIG. 3 or FIG. 5. The following describes embodiments of this application by using a network architecture shown in FIG. 3 as an application scenario. This scenario includes an NF entity 301, a first certificate signing entity 302, and a second certificate signing entity 303. The NF entity and the first certificate signing entity are in a security domain 304, and the second certificate signing entity is not in the security domain 304. Optionally, the second certificate signing entity may be in another security domain, or may not be in a security domain. This is not limited in this embodiment of this application. The second certificate signing entity stores one or more certificates in a certificate chain of the first certificate signing entity. For example, the second certificate signing entity may store a root certificate of the first certificate signing entity, so that the second certificate signing entity trusts an initial certificate signed by the first certificate signing entity. In this case, the first certificate signing entity may also be a trusted entity of the second certificate signing entity. For the certificate chain of the first certificate signing entity, when a certificate of the first certificate signing entity is signed by the first certificate signing entity, the certificate chain of the first certificate signing entity is the certificate of the first certificate signing entity, and the root certificate of the first certificate signing entity is the certificate of the first certificate signing entity. When the certificate of the first certificate signing entity is signed by another certificate signing entity, the certificate chain of the first certificate signing entity is an ordered certificate list, the 1^{st} certificate in the certificate chain is the certificate of the first certificate signing entity, each certificate except the last certificate is signed by a holder of a next certificate, and the last certificate in the certificate chain is a self-signed certificate, that is, the last certificate is signed by a holder of the last certificate. In this case, the last certificate is the root certificate of the first certificate signing entity. For example, the NF entity 301 may be one or more of the NEF 131 to the SMF 139 in FIG. 1, or may be a server or a function module in an information technology (information technology, IT) system. The first certificate signing entity may be a private certificate signing entity, the second certificate signing entity may be an operator certificate signing entity/public certificate signing entity, and the security domain 304 may be a device vendor domain, including devices of a same device vendor, or may be the intranet of an enterprise.

FIG. 4 is a schematic flowchart of a communication method 400 according to an embodiment of this application. The method may be applied to a scenario in which the NF entity 301, the first certificate signing entity 302, and the second certificate signing entity 303 shown in FIG. 3 communicate with each other. As shown in FIG. 4, the method may include the following plurality of steps.

S401: An NF entity sends a first request message to a first certificate signing entity, where the first request message is used to request an initial certificate.

The first request message includes identity information of the NF entity and a first public key, and the requested initial certificate is used to bind the identity information of the NF entity and the first public key, and is used as identity proof for the NF entity to request an end entity certificate. Optionally, the first request message is a certificate signing request (certificate signing request, CSR) message. In this implementation, before the NF entity sends the first request message to the first certificate signing entity, the method may further include: The NF entity generates a CSR message in a format defined by the public key cryptography standards (public key cryptography standards, PKCS) #10 protocol or the certificate management protocol version 2 (certificate management protocol version 2, CMPv2).

Before the NF entity sends the first request message to the first certificate signing entity, the method provided in this embodiment further includes: The NF entity obtains the first public key and a first private key corresponding to the first public key. Because the first public key and the first private key correspond to each other, the first public key and the first private key may also be referred to as a pair of a public key and a private key. The NF entity may implement a digital signature by using the first public key and the first private key. For example, after the NF entity obtains a signature on original data by using the first private key, another function entity can successfully verify the signature only by using the first public key.

In an optional obtaining manner, the NF entity generates the first public key and the first private key. For example, the NF entity generates the first public key and the first private key based on an asymmetric cryptography algorithm like Rivest-Shamir-Adleman (RSA). In this case, the NF entity does not need to obtain the first public key and the first private key from the outside.

In another optional obtaining manner, when the NF entity stores one or more pairs of public keys and private keys allocated by a network function management system, and at least one pair of a public key and a private key is not used, the NF entity may select, as the first public key and the first private key, one pair of a public key and a private key from the pair of the public key and the private key that are not used. The network function management system is a software and hardware system that implements various functions of network management, and may be a computer system or a networked system. When all pairs of public keys and private keys allocated by the network function management system are used, the NF entity may generate the first public key and the first private key, or may request the network function management system to allocate a new public key and a new private key, and then select, as the first public key and the first private key, one of one or more pairs of new public keys and new private keys allocated by the network function management system. In this case, the NF entity may use, as much as possible, the public key and the private key that are allocated by the network function management system, to reduce processing complexity of the NF entity.

In this embodiment of this application, the identity information of the NF entity identifies an identity of the NF entity, so that the first certificate signing entity can perform verification on the identity of the NF entity based on the identity information of the NF entity. Optionally, the identity information of the NF entity may be one or more parameters in NF configuration data (NF profile), for example, an NF identifier (like an NF ID (identity (Identity) or identifier (Identifier)) or an NF instance identifier (Instance ID)), an NF type (NF type), or a fully qualified domain name (fully qualified domain name, FQDN)/IP address.

S402: The first certificate signing entity performs verification on the identity of the NF entity based on the first request message, for example, the identity information of the NF entity in the message, to obtain a verification result.

S403: The first certificate signing entity sends a first response message to the NF entity based on the verification result.

If the verification result is that the verification succeeds, the first certificate signing entity signs an initial certificate for the NF entity, where the first response message includes the initial certificate and a certificate chain of the first certificate signing entity.

If the verification result is that the verification fails, the first certificate signing entity refuses to sign an initial certificate for the NF entity, and indicates, in the first response message sent to the NF entity, that the request for the initial certificate fails. Optionally, the first response message includes a failure cause or a bit string corresponding to the failure cause, and a correspondence between a failure cause and a bit string may be specified in a protocol.

That the first certificate signing entity signs an initial certificate for the NF entity includes: The first certificate signing entity signs certificate data (tbsCertificate) by using a private key of the first certificate signing entity to obtain a signature of the first certificate signing entity, and obtains the initial certificate based on the certificate data and the signature of the first certificate signing entity. The certificate data includes the identity information of the NF entity, the first public key, and identity information of the first certificate signing entity, so that a receiver learns of an identity of a certificate holder, a public key of the certificate holder, and an identity of a certificate issuer. For example, according to the X.509 protocol, the certificate data includes at least the following information:
(1) a certificate serial number (serialNumber): may be used as identification information of the initial certificate, and may be specified by the first certificate signing entity for the initial certificate. Optionally, the identification information is unique in initial certificates signed by the first certificate signing entity, and therefore can be used to accurately locate the initial certificate in the initial certificates signed by the first certificate signing entity. Optionally, the identification information may also be unique in certificates signed by the first certificate signing entity, and therefore can be used to accurately locate the initial certificate in the certificates signed by the first certificate signing entity;
(2) an issuer (issuer) name: including identity information of a certificate signing entity that signs the certificate, that is, including the identity information of the first certificate signing entity, and may be a name that complies with a format defined in the X.500 series protocols;
(3) a subject (subject) name: including the identity of the certificate holder, for example, including the identity information of the NF, and may be a name that complies with a format defined in the X.500 series protocols;
(4) subject public key information (subjectPublicKeyInfo): including the first public key and an identifier of a cryptography algorithm applied to the first public key; and
(5) a certificate validity (validity) period: that is, a time period for which the initial certificate is valid. After the time period expires, the initial certificate expires and becomes invalid.

In this embodiment of the present invention, that the first certificate signing entity signs an initial certificate for the NF entity may include: The first certificate signing entity signs the certificate data (tbsCertificate) by using the private key of the first certificate signing entity to obtain the signature of the first certificate signing entity, where the signature is used as a value of a signature value (signatureValue) field, and uses an identifier of a cryptography algorithm used for the signature as a value of a signature algorithm (signatureAlgorithm) field, where the initial certificate includes the certificate data, the signature value field, and the signature algorithm field.

The certificate chain of the first certificate signing entity is used to verify whether the initial certificate is issued by a trusted certificate signing entity.

Optionally, the initial certificate further includes first usage information, where the first usage information indicates a purpose of an end entity certificate that the initial certificate can be used to request, or may indicate a type of an end entity certificate that the initial certificate can be used to request. For example, a value of the first usage information may be a TLS client entity certificate, a TLS server entity certificate, an authorized access token signature certificate, a certificate for encrypting a hypertext transfer protocol (hypertext transfer protocol, HTTP) message between secure edge protection proxies (security edge protection proxy, SEPP), or a certificate for signing a client credential assertion (client credential assertion, CCA) token.

S404: The NF entity sends a second request message to the second certificate signing entity based on the first response message, where the second request message is used to request an end entity certificate.

That the NF entity sends a second request message to the second certificate signing entity based on the first response message specifically means that the NF entity sends the second request message to the second certificate signing entity when the first response message includes the initial certificate and the certificate chain of the first certificate signing entity. Optionally, the second request message may be a certificate enrollment request message generated by the NF entity according to the CMPv2 protocol or the PKSC #10 protocol. Correspondingly, when the first response message indicates that request for the initial certificate fails, the NF entity may send failure information to a network management system, or the NF entity may execute a policy preconfigured by the network management system for the NF entity. A specific policy may be re-initiating an application procedure, terminating a procedure, or the like. For example, if the network management system configures, in an initial instantiation phase of the NF entity, that the NF entity terminates the procedure after the request for the initial certificate fails, the NF entity terminates the procedure after receiving the first response message indicating that the request for the initial certificate fails.

Before the NF entity sends the second request message to the second certificate signing entity, the method further includes: The NF entity obtains a second public key and a second private key corresponding to the second public key. For a specific obtaining manner, refer to a manner in which an NF entity obtains a first public key and a first private key in step S701. Details are not described herein.

The second request message includes first data and a signature that is on the first data or digest information of the first data and that is obtained by the NF entity by using the first private key. The first data includes the following information:
(1) the identity information of the NF entity;
(2) the initial certificate;
(3) the certificate chain of the first certificate signing entity;
(4) the second public key;
(5) proof of possession of a second public key, where the proof of possession of a second public key may also be referred to as proof of possession of a second private key, and is used by the NF entity to prove to a certificate signing entity that the NF entity possesses and can use the second private key corresponding to the second public key for requesting the end entity certificate. Specifically, the proof of possession of a second public key may be a signature that is on second data or digest information of the second data and that is obtained by the NF entity by using the second private key. The second data is one or more fields in the second request message. Optionally, the one or more fields may be specified in a protocol, for example, may be a POPOSigningKey field in the certificate enrollment request message specified in the CMPv2 protocol;
(6) second usage information, where the second usage information indicates a purpose of the end entity certificate requested by the NF entity, or may indicate a type of the requested end entity certificate. For example, the type of the requested certificate may be a TLS client entity certificate, a TLS server entity certificate, an authorized access token signature certificate, a certificate for encrypting an HTTP message between SEPPs, or a certificate for signing a CCA token.

The NF entity inputs the first data into a digest algorithm to obtain the digest information of the first data. Similarly, the NF entity inputs the second data into a digest algorithm to obtain the digest information of the second data. The digest algorithm used by the NF entity to obtain the digest information of the first data may be the same as or different from the digest algorithm used by the NF entity to obtain the digest information of the second data.

S405: The second certificate signing entity sends a second response message to the NF entity based on the second request message.

For example, if the second request message meets a first condition, and the second certificate signing entity signs an end entity certificate for the NF entity, the second response message includes third data and a signature that is on the third data and that is obtained by the second certificate signing entity by using a private key of the second certificate signing entity, and the third data includes the end entity certificate and a certificate chain of the second certificate signing entity.

For another example, if the second request message does not meet a first condition, the second certificate signing entity refuses to sign an end entity certificate for the NF entity, and indicates, in the second response message sent to the NF entity, that request for the end entity certificate fails. Optionally, the second response message may include a failure cause or a bit string corresponding to the failure cause, and a correspondence between a failure cause and a bit string may be specified in a protocol.

Specifically, the first condition includes:
(1) verification on the identity information of the NF entity succeeds;
(2) the initial certificate is valid, that is, the initial certificate is in a validity period;
(3) the initial certificate meets a format requirement defined in a protocol, for example, the X.509 protocol. A specific protocol is not limited in this application;
(4) the initial certificate is signed by the first certificate signing entity, and the certificate chain of the first certificate signing entity includes at least one certificate downloaded and installed by the second certificate signing entity, where that the initial certificate is signed by the first certificate signing entity may be specifically that an issuer (issuer) name field of the initial certificate includes the identity information of the first certificate signing entity;
(5) the initial certificate is not revoked;
(6) data obtained by decrypting a signature in the second request message based on the first public key in the initial certificate is consistent with the first data in the second request message, or is consistent with the digest information of the first data;
(7) data obtained by decrypting the proof of possession of the second public key based on the second public key is consistent with the second data, or is consistent with the digest information of the second data.

Optionally, the foregoing condition (5) that the initial certificate is not revoked may be specifically: A serial number of the initial certificate is not in a certificate revocation list (certificate revocation list, CRL). For example, before the validity period expires, the certificate may become invalid in advance, e.g., when a name of a certificate holder changes, an association relationship between a certificate holder and a certificate signing entity changes (for example, an employee terminates an employment relationship with an organization), a private key of a certificate holder is leaked, or a certificate signing entity suspects that a private key of a certificate holder is leaked. In this case, the certificate signing entity needs to revoke the certificate. A CRL-based certificate revocation method is defined in the X.509 protocol. A CRL is a list with a timestamp, and includes information about a revoked certificate. For example, each revoked certificate may be identified by using a certificate serial number. After a certificate is added to the CRL, information about the certificate cannot be deleted from the CRL before a validity period of the certificate expires. The CRL may be issued by a certificate signing entity or by a separately deployed CRL issuing entity, and is provided free of charge in a public repository. The CRL further includes two fields: a current update date and a next update date of the CRL. A user can determine, based on information about the two dates, whether a currently queried CRL is the freshest. The certificate signing entity or the CRL issuing entity may periodically update the CRL, and publish an updated CRL and a signature of the certificate signing entity (or the CRL issuing entity) on the CRL to one or more nodes on a network, for example, to a lightweight directory access protocol (lightweight directory access protocol, LDAP) directory server. In addition, the certificate signing entity may include an address of a node in which the CRL is located in a certificate issued to the user. For example, the certificate signing entity may include a CRL distribution point (CRL Distribution Points) field in a certificate extension option to indicate the address of the node in which the CRL is located. In addition, the certificate signing entity may further include a freshest CRL (Freshest CRL) field in the certificate extension option, where the freshest CRL may also be referred to as a delta CRL distribution point (Delta CRL Distribution Point). The second certificate signing entity may obtain the CRL based on the address of the node in which the CRL is located that is included in the certificate, and query whether the CRL includes the certificate. If the CRL includes the certificate, it indicates that the certificate is revoked; or if the CRL does not include the certificate, it indicates that the certificate is not revoked. It should be noted that the CRL queried by the user may be the freshest, or may not be the freshest. This is not limited in this application.

Optionally, the foregoing condition (5) that the initial certificate is not revoked may also be: A response message from an online certificate status protocol (online certificate status protocol, OCSP) responder (OCSP responder) indicates that the initial certificate is not revoked. For example, the second certificate signing entity sends a request message to the OCSP responder to query whether the initial certificate is revoked; the second certificate signing entity receives a response message from the OCSP responder, where the response message includes an indication that the initial certificate is not revoked; and the second certificate signing entity determines, based on the indication, that the initial certificate is not revoked (for a specific process, refer to RFC 6960). Optionally, the second certificate signing entity may directly send an OCSP request message to the OCSP responder, or the second certificate signing entity may send an OCSP request message to the OCSP responder via another NF entity.

Specifically, during verification of the foregoing condition (6), a second CA inputs the first data into a digest algorithm to obtain the digest information of the first data. Similarly, during verification of the foregoing condition (7), the second CA inputs the second data into a digest algorithm to obtain the digest information of the second data. The digest algorithm used by the second CA to obtain the digest information of the first data may be the same as or different from the digest algorithm used by the second CA to obtain the digest information of the second data. The second CA and the NF entity use a same digest algorithm to obtain the digest information of the first data, and use a same digest algorithm to obtain the digest information of the second data. A manner in which the second CA and the NF entity determine to use the same digest algorithm is not limited in this embodiment of this application, for example, may be defined in a protocol.

Optionally, the first condition may further include that identity information of the NF entity that is included in the second request message is consistent with the identity information of the NF entity that is included in the initial certificate. The identity information of the NF entity that is included in the initial certificate may be specifically identity information included in the subject (subject) name field of the initial certificate. In this way, when a private key of the NF entity is leaked, and an attacker requests the second certificate signing entity for an end entity certificate by using the private key of the NF entity and the initial certificate, the identity information of the NF entity that is included in the second request message is identity information of another NF entity forged by the attacker, and the initial certificate includes the identity information of the NF entity. The second certificate signing entity refuses to sign the end entity certificate based on inconsistency between the two pieces of identity information, to prevent the attacker from forging the another NF entity to request the end entity certificate, using the end entity certificate to communicate with another NF entity in a network, and stealing information from the another NF entity, thereby improving network security. Similarly, when a private key of the NF entity is leaked, a malicious NF entity exists in a network, and the malicious NF entity requests the second certificate signing entity for an end entity certificate by using the private key of the NF entity and the initial certificate, the identity information of the NF entity that is included in the second request message is identity information of the malicious NF entity, and the initial certificate includes identity information of the NF entity. The second certificate signing entity refuses to sign the end entity certificate based on inconsistency between the two pieces of identity information, to prevent the malicious NF entity from abusing the initial certificate to request the end entity certificate, using the end entity certificate to communicate with another NF entity in the network, and stealing information from the another NF entity, thereby improving network security.

Optionally, the first condition may further include that the first usage information included in the initial certificate is consistent with the second usage information included in the second request message. The second usage information may be a type of a requested certificate. If the first usage information is inconsistent with the second usage information, the second certificate signing entity refuses to sign the end entity certificate. In this manner, if the initial certificate of the NF entity is used to request an end entity certificate whose purpose is A, the first usage information included in the initial certificate indicates the purpose A. When an attacker or a malicious NF entity uses the initial certificate of the NF entity to request an end entity certificate whose purpose is B from the second certificate signing entity, the second usage information included in the second request message indicates the purpose B. The second certificate signing entity refuses to sign the end entity certificate based on inconsistency between the first usage information and the second usage information, to prevent the attacker or the malicious NF entity from abusing the initial certificate, expanding a use scope of the initial certificate, obtaining end entity certificates for different uses, and using the end entity certificates for different uses to exercise rights beyond the permission scope, thereby improving network security.

When a certificate of the second certificate signing entity is signed by the second certificate signing entity, the certificate chain of the second certificate signing entity is the certificate of the second certificate signing entity. In this case, the certificate of the second certificate signing entity may also be referred to as a root certificate of the second certificate signing entity. When the certificate of the second certificate signing entity is signed by another certificate signing entity, the certificate chain of the second certificate signing entity is an ordered certificate list, the 1^{st} certificate in the certificate chain is the certificate of the second certificate signing entity, each certificate except the last certificate is signed by a holder of a next certificate, and the last certificate in the certificate chain is a self-signed certificate, that is, the last certificate is signed by a holder of the last certificate. In this case, the last certificate is a root certificate of the second certificate signing entity. The certificate of the second certificate signing entity includes a public key of the second certificate signing entity, and the second certificate signing entity uses a private key corresponding to the public key to sign third data or digest information of the third data. Optionally, when the third data includes the certificate chain of the second certificate signing entity, the third data may further include the certificate of the second certificate signing entity and the root certificate of the second certificate signing entity.

S406: The NF entity sends a revocation request message to the first certificate signing entity based on the second response message, where the revocation request message is used to request to revoke the initial certificate.

For example, when the second response message meets a second condition, the NF entity sends the revocation request message to the first certificate signing entity. For another example, when the second response message does not meet a second condition, the NF entity may send failure information to a network management system, and perform, based on an indication of the network management system, an operation like re-initiating a request procedure or terminating a procedure; or the NF entity may execute a policy preconfigured by the network management system for the NF entity. A specific policy may be re-initiating a request procedure, terminating a procedure, or the like. For example, if the network management system configures, in an initial instantiation phase of the NF entity, that the NF entity terminates the procedure after the request for the initial certificate fails, the NF entity terminates the procedure after receiving the first response message indicating that the request for the initial certificate fails.

The second condition includes:
(1) the second response message includes the end entity certificate; and
(2) data obtained by decrypting a signature in the second response message based on a public key in the certificate of the second certificate signing entity is consistent with the third data, or is consistent with the digest information of the third data.

Optionally, the second condition may further include:
(3) the end entity certificate meets a format requirement defined in a protocol, for example, the X.509 protocol. A specific protocol is not limited in this application;
(4) a holder of the end entity certificate is the NF entity, and specifically, a subject name of the end entity certificate may include the identity information of the NF entity;
(5) the end entity certificate is valid, that is, the end entity certificate is in a validity period;
(6) the end entity certificate is not revoked. For details, refer to step S705; and
(7) a type of the end entity certificate is consistent with a type of a requested certificate in the second request message.

Optionally, the revocation request message includes identification information of the initial certificate, and the identification information is used to determine the initial certificate that the NF entity requests to revoke. For example, the identification information of the initial certificate may be a serial number of the initial certificate. The identification information of the initial certificate is unique in initial certificates signed by the first certificate signing entity. The revocation request message includes the identification information of the initial certificate, so that the first certificate signing entity can accurately locate the initial certificate that needs to be revoked, and record a status of the certificate as revoked in time.

Optionally, the revocation request message includes the identity information of the NF entity, and the identity information is used to determine the initial certificate of the NF entity. For example, the identity information of the NF entity may be one or more parameters in an NF profile of the NF entity.

In this manner, after requesting the end entity certificate, the NF entity sends the revocation request message to the first certificate signing entity, to trigger revocation of the initial certificate. In this way, if an attacker or a malicious network function entity requests an end entity certificate from the second certificate signing entity by using the initial certificate of the NF entity, the second certificate signing entity may refuse to sign the end entity certificate for the attacker or the malicious network function entity by verifying that the initial certificate is revoked, to prevent the attacker or the malicious network function entity from using the end entity certificate signed by the second certificate signing entity to counterfeit the NF entity to communicate with another NF entity in a network, and stealing information from the another NF entity, thereby improving network communication security.

Further, the NF entity sends the revocation request message when verifying that the second response message meets the second condition, and does not send the revocation request message when the second response message does not meet the second condition. In this way, when re-initiating a request procedure based on an indication of the network management system or a policy preconfigured by the network management system, the NF entity may use the initial certificate to request the end entity certificate again, to avoid re-requesting the initial certificate after the revocation request message is sent to revoke the initial certificate, thereby simplifying a procedure, reducing signaling overheads, and improving a processing speed.

S407: The first certificate signing entity records a status of the initial certificate as revoked based on the revocation request message.

Specifically, before the first certificate signing entity records the status of the initial certificate as revoked, the method provided in this embodiment may further include: The first certificate signing entity determines, based on the revocation request message, the initial certificate that the NF entity requests to revoke, which may include one of the following manner 1.1 to 1.3.

Manner 1.1: The first certificate signing entity determines, based on the identification information of the initial certificate that is included in the revocation request message, the initial certificate that the NF entity requests to revoke. Because each initial certificate signed by the first certificate signing entity has unique identification information, the first certificate signing entity may determine, based on the identification information, the initial certificate that the NF entity requests to revoke.

Manner 1.2: The first certificate signing entity determines the initial certificate of the NF entity based on the identity information of the NF entity that is included in the revocation request message. Specifically, the first certificate signing entity stores signed certificates, and the first certificate signing entity searches the stored certificates for a certificate whose certificate holder is the NF entity, and determines the certificate as the initial certificate of the NF entity. For example, the first certificate signing entity searches the stored certificates for a certificate whose subject name includes the identity information of the NF entity, and uses the certificate as the initial certificate of the NF entity. In this way, in a scenario in which one network function entity requests a plurality of initial certificates, the plurality of initial certificates of the network function entity may be located at a time, so that a processing speed can be improved, and a processing delay can be reduced.

Manner 1.3: When the first certificate signing entity and each NF entity have a unique point-to-point communication tunnel, the first certificate signing entity may determine the identity information of the NF entity based on the revocation request message from the point-to-point communication tunnel between the first certificate signing entity and the NF entity, then search stored certificates for a certificate whose certificate holder is the identity information of the NF entity, and determine the certificate as the initial certificate of the NF entity. For example, the first certificate signing entity searches the stored certificates for a certificate whose subject name includes the identity information of the NF entity, and uses the certificate as the initial certificate of the NF entity. In this implementation, when the revocation request message does not include the identification information of the initial certificate or the identity information of the network function entity, the first certificate signing entity may also obtain related identity information.

Optionally, the first certificate signing entity records the status of the initial certificate as revoked. The status of the initial certificate may be queried by some network entities. For example, the first certificate signing entity allows a trusted network entity to query the status of the initial certificate. Alternatively, the status of the initial certificate may be queried by all network entities. In this case, the status may also be publicly disclosed. For example, that the first certificate signing entity records the status of the initial certificate as revoked may include but is not limited to the following manner 2.1 to 2.4. In the manner 2.1 or 2.2, the status of the initial certificate is publicly disclosed.

Manner 2.1: The first certificate signing entity adds the initial certificate to a CRL. For example, the first certificate signing entity adds a serial number of the initial certificate to the CRL. After the initial certificate is added to the CRL, the status of the initial certificate is considered as revoked. That is, if a network entity finds that the initial certificate is included in the CRL, the network entity considers that the initial certificate is revoked.

Manner 2.2: The first certificate signing entity records the status of the initial certificate in an OCSP responder as revoked. Optionally, the first certificate signing entity may record the status of the initial certificate in the OCSP responder as revoked. For example, the status of the initial certificate in the OCSP responder is originally valid, and the first certificate signing entity records the status as revoked. Optionally, the first certificate signing entity may also add a new status indicator, and record the status indicator of the initial certificate as revoked.

Manner 2.3: When a function entity that maintains a CRL is independently deployed, the foregoing manner 2.1 further includes: The first certificate signing entity obtains, from the determined initial certificate of the NF entity, an address of the function entity that maintains the CRL, and sends, based on the address, a first update request message to the function entity that maintains the CRL, to request to add the initial certificate to the CRL. For example, an extension option of the initial certificate includes a CRL distribution point (CRL Distribution Points) field, and optionally, may further include a freshest CRL (Freshest CRL) field, indicating the address of the function entity that maintains the CRL, where the freshest CRL field may also be referred to as a delta CRL distribution point (Delta CRL Distribution Point) field. The first certificate signing entity obtains, from the foregoing field of the initial certificate, the address of the function entity that maintains the CRL, and sends the first update request message to the address. The first certificate signing entity may periodically send the first update request message, for example, send the first update request message every hour, one day, or one week; or the first certificate signing entity may send the first update request message each time a certificate is revoked. Optionally, the first update request message includes the identification information of the initial certificate, for example, a serial number of the initial certificate. Correspondingly, after receiving the first update request message from the first certificate signing entity, the function entity that maintains the CRL updates the locally stored CRL, for example, adds the identification information of the initial certificate to the CRL.

Manner 2.4: When an OCSP responder is independently deployed, the foregoing manner 2.2 further includes: The first certificate signing entity sends a second update request message to the OCSP responder, to request to record the status of the determined initial certificate of the NF entity as revoked, where the second update request message may include the identification information of the initial certificate. Correspondingly, after receiving the second update request message from the first certificate signing entity, the OCSP responder records the status of the initial certificate in an OCSP certificate status library as revoked.

According to the foregoing solution, the status of the initial certificate is recorded as revoked by using the CRL or the OCSP responder, and the status of the initial certificate can be found. Therefore, when a private key of the network function entity is leaked, and an attacker or a malicious network function entity requests an end entity certificate by using the initial certificate of the network function entity, each certificate signing entity configured to sign the end entity certificate and the network function entity may obtain a status record of the initial certificate in time, to refuse the request of the attacker or the malicious network function entity in time, thereby improving network communication security.

Assuming that after the foregoing procedure ends, a first private key of the NF entity is leaked, and another network entity, for example, an attacker or a malicious network function entity, requests an end entity certificate from the second certificate signing entity by using the first private key of the NF entity and the initial certificate. For example, the another network entity sends a second request message to the second certificate signing entity, where the second request message includes the initial certificate and a signature of the NF entity, and the signature is a signature that is on the first data in the second request message and that is obtained by the another network entity by using the first private key of the NF entity. After receiving the second request message from the another network entity, the second certificate signing entity verifies whether the second request message meets the first condition, including verifying whether the initial certificate is revoked. In step S407, the first certificate signing entity has recorded the status of the initial certificate of the NF entity as revoked. Therefore, the second certificate signing entity can determine that the initial certificate is revoked. For example, in an implementation, the second certificate signing entity verifies, by querying the CRL, whether the initial certificate is revoked. In step S407, the first certificate signing entity has recorded the status of the initial certificate of the NF entity as revoked, and adds the initial certificate to the CRL, or the function entity that requests to maintain the CRL adds the initial certificate to the CRL. Therefore, after querying the CRL, the second certificate signing entity can determine that the initial certificate is revoked. In another implementation, the second certificate signing entity verifies, by querying the OCSP responder, whether the initial certificate is revoked. In step S407, the first certificate signing entity has recorded the status of the initial certificate of the NF entity as revoked, and records the status of the initial certificate in the OCSP responder as revoked, or requests the OCSP responder to record the status of the initial certificate as revoked. Therefore, after querying the OCSP responder, the second certificate signing entity can determine that the initial certificate is revoked.

Therefore, the second certificate signing entity determines that the second request message does not meet the first condition, and therefore refuses to sign the end entity certificate. Optionally, the second certificate signing entity returns a second response message to an attacker or a malicious network function entity, indicating that the request for the end entity certificate fails. Optionally, if the second certificate signing entity finds that the second request message includes the revoked initial certificate, the second certificate signing entity considers that the second request message is from an attacker or a malicious network function entity, and may not send the second response message. Further, the second certificate signing entity may send an alert message to the network management system, so that the network management system processes the attacker or the malicious network function entity, to prevent the attacker or the malicious network function entity from continuing to request the end entity certificate, using the obtained end entity certificate to communicate with another NF entity in a network, and stealing information from the another NF entity, thereby improving network security.

In the foregoing manner, after receiving the revocation request message, the first certificate signing entity records a status in which the initial certificate of the NF entity can be queried as revoked. In this way, when the attacker requests the end entity certificate from the second certificate signing entity by using the initial certificate of the NF entity, the second certificate signing entity may query the status of the initial certificate that is recorded by the first certificate signing entity to verify that the initial certificate is revoked, to refuse to sign the end entity certificate. This manner can prevent the attacker from using the end entity certificate signed by the second certificate signing entity to counterfeit the NF entity to communicate with the another NF entity in the network, and stealing the information from the another NF entity, thereby improving network security.

In the descriptions of the foregoing method, it is assumed that a certificate signing entity integrates a function of a certificate enrollment entity. In another possible network architecture, the certificate enrollment entity is independently deployed, and is configured to request, after obtaining and performing verification on a user identity, the certificate signing entity to sign a certificate. In this case, steps S401 to S403 may be replaced with steps S401a, S402a, S403a-1, and S403a-2.

S401a: The NF entity sends a first request message to a first certificate enrollment entity, where the first request message is used to request an initial certificate.

S402a: The first certificate enrollment entity performs verification on the identity of the NF entity based on the first request message, for example, the identity information of the NF entity in the message, to obtain a verification result.

S403a-1: The first certificate enrollment entity sends a first indication message based on the verification result.

For example, if the verification result is that the verification succeeds, the first certificate enrollment entity sends the first indication message to the first certificate signing entity, to request the initial certificate. The first indication message includes the identity information of the NF entity and a first public key.

For another example, if the verification result is that the verification fails, the first certificate enrollment entity sends the first indication message to the NF entity, indicating that the request for the initial certificate fails.

S403a-2: The first certificate signing entity signs an initial certificate for the NF entity based on the first indication message, and includes the initial certificate and a certificate chain of the first certificate signing entity in the first response message sent to the NF entity.

It should be noted that steps S401a to S403b are not shown in the figure.

In another possible network architecture, one or more certificate management NF entities may exist in one security domain. Each certificate management NF entity may be configured to request a certificate on behalf of some or all of the NF entities in the security domain, for example, request an initial certificate or an end entity certificate. Each certificate management NF entity may be further configured to forward a certificate signed by a certificate signing entity to the NF entity, for example, forward an initial certificate signed by the first certificate signing entity (for example, a private certificate signing entity) to the NF entity, and forward an end entity certificate signed by the second certificate signing entity (for example, an operator certificate signing entity or a public certificate signing entity) to the NF entity. Optionally, each certificate management NF entity may be configured to forward one or more types of certificates from one or more certificate signing entities.

The following describes another implementation of the method 400 by using a network architecture shown in FIG. 5 as an example. As shown in FIG. 5, a certificate management NF entity exists in a security domain 304, and is configured to request a certificate at least on behalf of an NF entity 301, or may be configured to forward, to an NF entity, an initial certificate signed by a first certificate signing entity 302 and an end entity certificate signed by a second certificate signing entity 303. That is, in this network architecture, communication between the first certificate signing entity 302 and the NF entity 301 and communication between the second certificate signing entity 303 and the NF entity 301 need to be performed through the certificate management NF entity. Specifically, steps S401, S403, S404, S405, and S406 may be replaced with steps S401b, S403b, S404b, S405b, and S406b.

S401b: The certificate management NF entity sends a first request message to a first certificate signing entity, where the first request message is used to request an initial certificate.

The first request message includes identity information of the NF entity and a first public key, and obtaining the first public key may include but is not limited to the following manner 3.1 or 3.2.

Manner 3.1: The NF entity obtains the first public key and a first private key corresponding to the first public key. In an optional obtaining manner, the NF entity generates a pair of the first public key and the first private key. For example, the NF entity generates the first public key and the first private key based on an asymmetric cryptography algorithm such as RSA. In another optional obtaining manner, when the NF entity stores one or more pairs of public keys and private keys allocated by a network function management system, and at least one pair of a public key and a private key is not used, the NF entity may select, as the first public key and the first private key, one pair of a public key and a private key from the pair of the public key and the private key that are not used. When all pairs of public keys and private keys allocated by the network function management system are used, the NF entity may generate the first public key and the first private key, or may request the network function management system to allocate a new public key and a new private key, and then select, as the first public key and the first private key, one of one or more pairs of new public keys and new private keys allocated by the network function management system.

Manner 3.2: The NF entity obtains the first public key and a first private key corresponding to the first public key. Specifically, when the certificate management NF entity stores one or more pairs of public keys and private keys allocated by a network function management system, and at least one pair of a public key and a private key is not used, the certificate management NF entity may select, as the first public key and the first private key, one pair of a public key and a private key from the pair of the public key and the private key that are not used. When all pairs of public keys and private keys allocated by the network function management system are used, the certificate management NF entity may request the network function management system to allocate a new public key and a new private key, and then select, as the first public key and the first private key, one of one or more pairs of new public keys and new private keys allocated by the network function management system.

Manner 3.3: The certificate management NF entity generates the first public key and a first private key. For example, the certificate management NF entity generates the first public key and the first private key based on an asymmetric cryptography algorithm such as RSA.

In the manner 3.1, that the certificate management NF entity sends a first request message to the first certificate signing entity includes but is not limited to the following manner 4.1 to 4.3.

Manner 4.1: The NF entity sends the first request message to the first certificate signing entity through the certificate management NF entity, where the first request message includes the identity information of the NF entity and the first public key.

Manner 4.2: The NF entity sends the first public key to the certificate management NF entity, and the certificate management NF entity sends the first request message to the first certificate signing entity, where the first request message includes the identity information of the NF entity and the first public key. The identity information of the NF entity may be sent by the NF entity to the certificate management NF entity, or may be obtained by the certificate management NF entity from another NF entity. This is not limited in this embodiment of this application. In this manner, the certificate management NF entity replaces the NF entity to generate the first request message, so that processing complexity of the NF entity can be reduced, and processing efficiency can be improved.

Manner 4.3: The NF entity sends a pair of the first public key and the first private key to the certificate management NF entity, and the certificate management NF entity sends the first request message to the first certificate signing entity, where the first request message includes the identity information of the NF entity and the first public key. In this manner, the certificate management NF entity replaces the NF entity to generate the first request message, so that processing complexity of the NF entity can be reduced, and processing efficiency can be improved. In addition, the certificate management NF entity may further use the received first private key to replace the NF entity for actions, for example, generate a second request message in a subsequent step. This can further reduce processing complexity of the NF entity, and improve processing efficiency.

In the manner 3.2, for an implementation in which the certificate management NF entity sends the first request message to the first certificate signing entity, refer to the manner 4.3. Details are not described herein again.

In the manner 3.3, the certificate management NF entity may send the first private key to the NF entity, and send the first request message to the first certificate signing entity, where the first request message includes the identity information of the NF entity and the first public key. The identity information of the NF entity may be sent by the NF entity to the certificate management NF entity, or may be obtained by the certificate management NF entity from another NF entity. This is not limited in this embodiment of this application. In this manner, the certificate management NF entity replaces the NF entity to generate the first request message, so that processing complexity of the NF entity can be reduced, and processing efficiency can be improved.

S403b: The first certificate signing entity sends a first response message to the NF entity based on the verification result through the certificate management NF entity.

S404b: The certificate management NF entity sends a second request message to the second certificate signing entity based on the first response message, where the second request message is used to request an end entity certificate. For a specific implementation, refer to steps S404 and S401b. Details are not described herein again.

S405b: The second certificate signing entity sends a second response message to the NF entity based on the second request message through the certificate management NF entity.

S406b: The certificate management NF entity sends a revocation request message to the first certificate signing entity based on the second response message, where the revocation request message is used to request to revoke the initial certificate.

For a specific implementation, refer to steps S406 and S401b. Details are not described herein again.

It should be noted that steps S401b, S403b, S404b, S405b, and S406b are not shown in the figure.

In the foregoing embodiment, after completing enrollment of a second certificate, the NF entity requests the first certificate signing entity to revoke the initial certificate. Correspondingly, after receiving a request from the NF entity, the first certificate signing entity records a status of the initial certificate as revoked. If a private key of the NF entity is leaked, and an attacker or a malicious network function entity requests the second certificate signing entity for an end entity certificate by using the private key of the NF entity and the initial certificate, the second certificate signing entity refuses to sign the end entity certificate for the attacker or the malicious network function entity by verifying that the initial certificate is revoked, to prevent the attacker or the malicious network function entity from using the end entity certificate to counterfeit the NF entity to communicate with another NF entity in a network, and stealing information from the another NF entity, thereby improving network communication security.

Further, in this embodiment of this application, after receiving the second request message, the second certificate signing entity may verify the identity information of the NF entity that is included in the initial certificate and identity information of the NF entity that is included in the second request message. When the two pieces of identity information are inconsistent, the second certificate signing entity can refuse to sign the end entity certificate, to prevent, in a more timely manner, the attacker or the malicious network function entity from obtaining the end entity certificate signed by the second certificate signing entity, communicating with the another NF entity in the network, and stealing the information from the another NF entity, thereby effectively improving network communication security in a more timely manner.

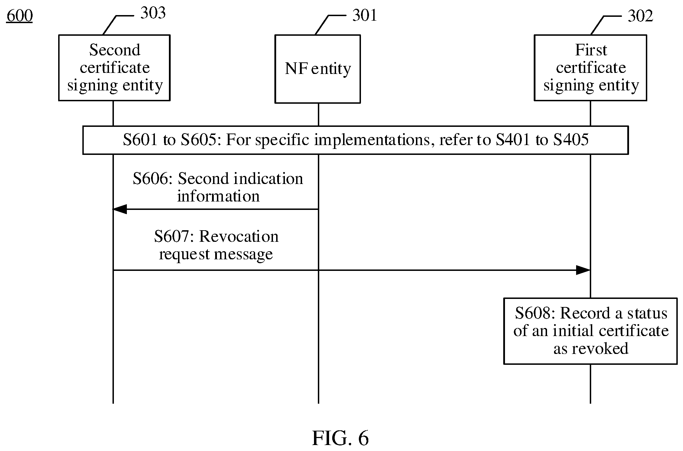

FIG. 6 is a schematic flowchart of another communication method 600 according to an embodiment of this application. The method may be applied to a scenario in which the NF entity 301, the first certificate signing entity 302, and the second certificate signing entity 303 shown in FIG. 3 communicate with each other. A difference from the method 400 lies in that in this implementation, after an NF entity requests an end entity certificate by using an initial certificate, a second certificate signing entity is triggered to request a first certificate signing entity to revoke the initial certificate. As shown in FIG. 6, the method includes the following plurality of steps.

S601 to S605: For specific implementations, refer to S401 to S405. For brevity, details are not described herein again.

S606: The NF entity sends a second indication message to the second certificate signing entity based on the second response message, where the second indication message indicates that enrollment of an end entity certificate is completed.

For example, if the second response message meets a second condition, the second indication message sent by the NF entity to the second certificate signing entity indicates that the enrollment of the end entity certificate is completed. For another example, if the second response message does not meet a second condition, the second indication message sent by the NF entity to the second certificate signing entity indicates that the end entity certificate is incorrect. Optionally, the second indication message may carry an error cause or a bit string corresponding to the error cause, where a correspondence between an error cause and a bit string may be defined in a protocol. For the second condition, refer to step S406. Details are not described herein again.

Optionally, the NF entity signs the second indication message by using a second private key, where the second private key corresponds to a second public key included in the end entity certificate in the second response message. In this manner, the NF entity protects the second indication message, so that a receiver can confirm that the second indication message is sent by the NF entity, and information in the second indication message is complete and accurate, thereby ensuring message transmission security.

In this manner, after requesting the end entity certificate by using the initial certificate, the NF entity sends an instruction to the second certificate signing entity, to trigger the second certificate signing entity to request the first certificate signing entity to record a status of the initial certificate as revoked. In this way, when an attacker or a malicious network function entity requests the second certificate signing entity for an end entity certificate by using the initial certificate of the NF entity, the second certificate signing entity may query a record of the initial certificate by the first certificate signing entity, verify that the initial certificate is revoked, and refuse to sign the end entity certificate for the attacker or the malicious network function entity, to prevent the attacker or the malicious network function entity from using the end entity certificate signed by the second certificate signing entity to counterfeit the NF entity to communicate with another NF entity in a network, and stealing information from the another NF entity, thereby improving network communication security.

S607: The second certificate signing entity sends a revocation request message to the first certificate signing entity based on the second indication message from the NF entity, where the revocation request message is used to request to revoke the initial certificate of the NF entity.

Specifically, the second certificate signing entity sends the revocation request message to the first certificate signing entity when the second indication message meets a third condition. The third condition includes:
(1) the second indication message indicates that enrollment of the end entity certificate is completed; and
(2) a result obtained by verifying a signature of the second indication message based on the second public key in the end entity certificate signed by the second certificate signing entity for the NF entity is that the verification succeeds.

Optionally, before the second certificate signing entity sends the revocation request message to the first certificate signing entity based on the second indication message from the NF entity, the method further includes: The second certificate signing entity signs the second indication message by using use of the second certificate signing entity, so that a receiver can determine, by using the signature, that the revocation request message is from the second certificate signing entity, and the revocation request message is complete and accurate, thereby ensuring that the initial certificate is normally revoked, and improving network communication security.

Optionally, the revocation request message includes identification information of the initial certificate, and the identification information is used to determine the initial certificate that the second certificate signing entity requests to revoke. For example, the identification information of the initial certificate may be a serial number of the initial certificate. The identification information of the initial certificate is unique in initial certificates signed by the first certificate signing entity. The revocation request message includes the identification information of the initial certificate, so that the first certificate signing entity can accurately locate the initial certificate that needs to be revoked, and record a status of the certificate as revoked in time.

Optionally, the revocation request message includes identity information of the NF entity, and the identity information is used to determine that the initial certificate that the second certificate signing entity requests to revoke is the initial certificate of the NF entity. For example, the identity information of the NF entity may be one or more parameters in an NF profile of the NF entity.

Before the second certificate signing entity sends the revocation request message to the first certificate signing entity based on the second indication message, the method provided in this embodiment further includes: The second certificate signing entity determines, based on the initial certificate, identity information of the first certificate signing entity configured to revoke the initial certificate, for example, may determine the identity information of the first certificate signing entity based on an issuer name included in the initial certificate, and sends the revocation request message to the first certificate signing entity based on the identity information.

In an implementation, the second certificate signing entity stores a correspondence between identity information and an address of a certificate signing entity, and may determine a corresponding address of the first certificate signing entity based on the identity information of the first certificate signing entity, to send the revocation request message to the first certificate signing entity based on the address. In this manner, the second certificate signing entity may directly determine an address of the first certificate signing entity, and send the revocation request message to the first certificate signing entity based on the address, thereby simplifying a procedure.

In another implementation, the second certificate signing entity sends identity information of the first certificate signing entity to another NF entity, and the another NF entity determines an address of the first certificate signing entity based on the identity information of the first certificate signing entity, to send the revocation request message to the first certificate signing entity based on the address. In this case, the second certificate signing entity does not need to store a correspondence between identity information and an address of a certificate signing entity, and only needs to provide the identity information of the first certificate signing entity for another function entity, thereby reducing processing complexity of the second certificate signing entity, and saving storage space of the second certificate signing entity.

For example, when the second certificate signing entity provides a service such as signing an end entity certificate for NF entities in a plurality of operator domains, that the second certificate signing entity sends the revocation request message to the first certificate signing entity specifically includes steps S607a to S607c.

S607a: The second certificate signing entity determines, based on the initial certificate, for example, an issuer name included in the initial certificate, identity information of the first certificate signing entity configured to revoke the initial certificate and an operator domain in which the first certificate signing entity is located.

S607b: The second certificate signing entity sends a revocation request message and the identity information of the first certificate signing entity to an external message forwarding NF entity, where the external message forwarding NF entity is located in the operator domain in which the first certificate signing entity is located, is configured to forward a message from another operator domain, and stores a correspondence between identity information and an address of a certificate signing entity in the operator domain. Optionally, the identity information of the first certificate signing entity may be included in the revocation request message, or may not be included in the revocation request message. This is not limited in this application.

S607c: The external message forwarding NF entity determines a corresponding address of the first certificate signing entity based on the identity information of the first certificate signing entity that is provided by the second certificate signing entity, and forwards the revocation request message from the second certificate signing entity to the first certificate signing entity based on the address. It should be noted that steps S607a to S607c are not shown in the figure.

S608: The first certificate signing entity records a status of the initial certificate as revoked based on the revocation request message. For a specific implementation, refer to step S407. Details are not described herein again.

The method 600 is also applicable to a network architecture in which a certificate enrollment entity is independently deployed and a network architecture in which a certificate management NF entity exists in a security domain shown in FIG. 5. For a specific implementation, refer to the method 400. Details are not described herein again.

In the foregoing embodiment, after completing enrollment of the end entity certificate, the NF entity triggers the second certificate signing entity to request the first certificate signing entity to revoke the initial certificate. Correspondingly, the first certificate signing entity records, based on the request, a status in which the initial certificate can be queried as revoked. In this way, when an attacker or a malicious network function entity requests the second certificate signing entity for an end entity certificate by using the initial certificate of the NF entity, the second certificate signing entity may verify that the initial certificate is revoked based on a record of the initial certificate, and refuse to sign the end entity certificate for the attacker or the malicious network function entity, to prevent the attacker or the malicious network function entity from using the end entity certificate signed by the second certificate signing entity to counterfeit the NF entity to communicate with another NF entity in a network, and stealing information from the another NF entity, thereby improving network communication security.

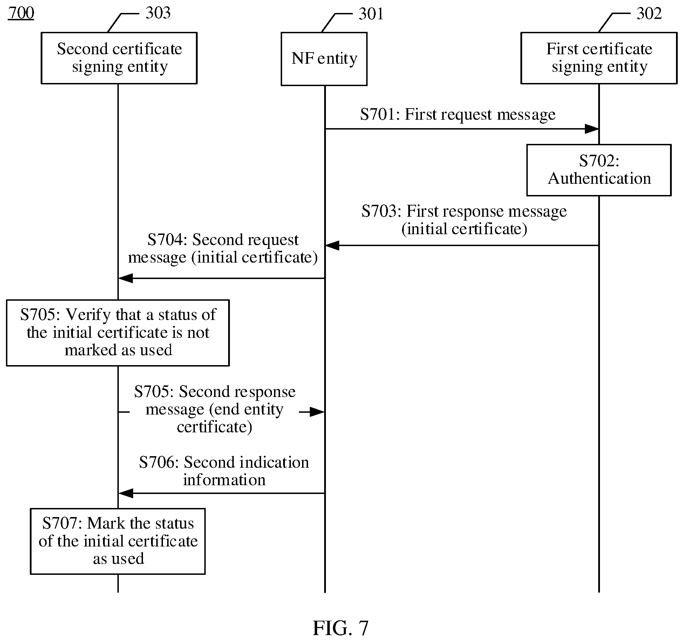

FIG. 7 is a schematic flowchart of still another communication method 700 according to an embodiment of this application. The method may be applied to a scenario in which the NF entity 301, the first certificate signing entity 302, and the second certificate signing entity 303 shown in FIG. 3 communicate with each other. A difference from the foregoing methods 400 and 600 lies in that in the method 700, when determining that a status of an initial certificate is not marked as used, a second certificate signing entity signs an end entity certificate for an NF entity, and marks the status of the initial certificate as used after signing the end entity certificate. In this manner, network communication security can be improved. As shown in FIG. 7, the method includes the following plurality of steps.

S701 to S704: For specific implementations, refer to steps S401 to S404. For brevity, details are not described herein again.

S705: The second certificate signing entity sends a second response message to the NF entity based on the second request message.

Specifically, if the second request message meets a first condition, and the status of the initial certificate included in the second request message is not marked as used, the second certificate signing entity signs an end entity certificate for the NF entity, where the second response message includes third data and a signature that is on the third data and that is obtained by the second certificate signing entity by using a private key of the second certificate signing entity, and the third data includes the end entity certificate and a certificate chain of the second certificate signing entity.

Correspondingly, if the second request message does not meet a first condition, or the status of the initial certificate included in the second request message is marked as used, the second certificate signing entity refuses to sign an end entity certificate for the NF entity, and indicates, in the second response message sent to the NF entity, that the request for the end entity certificate fails. Optionally, the second response message includes a failure cause or a bit string corresponding to the failure cause, and a correspondence between a failure cause and a bit string may be specified in a protocol.

For the first condition, refer to step S405. Details are not described herein again.

In a possible implementation, the second certificate signing entity may determine, based on that a list does not include the initial certificate, that the status of the initial certificate is not marked as used, where the list includes the initial certificate used by the second certificate signing entity to sign the end entity certificate.

A format of the list may include but is not limited to the following manner 5.1 or 5.2.

Manner 5.1: The list includes identification information of the initial certificate used by the second certificate signing entity to sign the end entity certificate, for example, a serial number of the initial certificate. The second certificate signing entity determines, by querying whether the list includes the identification information of the initial certificate in the second request message, whether the initial certificate is marked as used.

Manner 5.2: The list includes identity information of the NF entity and identification information of an initial certificate used by the NF entity each time to request an end entity certificate from the second certificate signing entity. For example, a format of the list is shown in Table 1. In this implementation, the second certificate signing entity may first query whether the list includes the identity information of the NF entity in the second request message. If the list does not include the identity information of the NF entity in the second request message, the second certificate signing entity may determine that the status of the initial certificate in the second request message is not marked as used. If the list includes the identity information of the initial certificate in the second request message, the second certificate signing entity continues to query whether identification information of the initial certificate corresponding to the identity information of the NF entity includes the identification information of the initial certificate in the second request message. If the identification information of the initial certificate includes the identification information of the initial certificate in the second request message, the second certificate signing entity may determine that the status of the initial certificate is marked as used. If the identification information of the initial certificate does not include the identification information of the initial certificate in the second request message, the second certificate signing entity may determine that the status of the initial certificate is not marked as used. In this implementation, when one NF entity requests the end entity certificate from the second certificate signing entity for a plurality of times by using different initial certificates, a query speed of the second certificate signing entity can be improved, and a processing delay can be reduced.

**Table 1 Diagram of a format of a list**

| Identity information of an NF entity (for example, an NF instance ID) | Identification information of an initial certificate (for example, a serial number of the initial certificate) |
|---|---|
| NF #1 | XXXXXX |
| NF #1 | XXXXYY |
| NF #2 | YYYYZZ |
| NF #2 | ZZZZYY |

Optionally, the second certificate signing entity may store the list locally, or the second certificate signing entity may publish the list to another function entity after signing the list, or the second certificate signing entity stores the list locally and publishes the list to another function entity after signing the list. The another function entity is configured to maintain the list. A function entity that maintains the list may be the same as or different from a function entity that maintains a CRL of the second certificate signing entity. This is not limited in this embodiment of this application.

Optionally, the second certificate signing entity allows another network entity to query the list. For example, after publishing the list to another function entity after signing the list, the second certificate signing entity discloses an address of the function entity to another certificate signing entity in an operator domain. The second certificate signing entity determines, based on that a list of all certificate signing entities does not include the initial certificate in the second request message, that the status of the initial certificate is not marked as used. In this way, when one NF entity requests an end entity certificate from a plurality of certificate signing entities, if an attacker or a malicious network function entity requests an end entity certificate from the second certificate signing entity by using an initial certificate used by the NF entity, the second certificate signing entity may determine, based on that the initial certificate is included in a list of other certificate signing entities, that the status of the initial certificate is marked as used, and refuse to sign the end entity certificate, to prevent the attacker or the malicious network function entity from using the end entity certificate signed by the second certificate signing entity to counterfeit the NF entity to communicate with another NF entity in a network, and stealing information from the another NF entity, thereby improving network communication security.

In another possible implementation, the second certificate signing entity determines, based on a response message of a server, that the status of the initial certificate is not marked as used. Specifically, the second certificate signing entity sends a status query message to the server, where the status query message is used to query whether a status of the initial certificate is marked as used, and may include identification information of the initial certificate. The server may determine whether the status of the initial certificate is marked as used. If the response message of the server indicates that the status of the initial certificate is not marked as used, the second certificate signing entity may determine that the status of the initial certificate is not marked as used.

In the foregoing manner, when an attacker or a malicious network function entity requests an end entity certificate from the second certificate signing entity by using the initial certificate used by the NF entity, the second certificate signing entity determines that the status of the initial certificate is marked as used, and refuses to sign the end entity certificate, to prevent the attacker or the malicious network function entity from using the end entity certificate signed by the second certificate signing entity to counterfeit the NF entity to communicate with another NF entity in a network, and stealing information from the another NF entity, thereby improving network communication security.

S706: The NF entity sends a second indication message to the second certificate signing entity based on the second response message, where the second indication message indicates that enrollment of an end entity certificate is completed.

For a specific implementation, refer to step S606. Details are not described herein again.

S707: The second certificate signing entity marks the status of the initial certificate as used based on the second indication message from the NF entity, where the initial certificate is an initial certificate used by the second certificate signing entity to sign an end entity certificate for the NF entity.

It should be noted that, the essence of marking, by the second certificate signing entity, the status of the initial certificate as used herein is the same as that of recording, by the first certificate signing entity, the status of the initial certificate as revoked in the methods 400 and 600. The second certificate signing entity determines that the status of the initial certificate is marked as used, or finds that the first certificate signing entity records the status of the initial certificate as revoked, and considers that the end entity certificate cannot be signed for the NF entity that uses the initial certificate.

In a possible implementation, the second certificate signing entity triggers adding the initial certificate to a list, so that the status of the initial certificate is marked as used, where the list includes the initial certificate used by the second certificate signing entity to sign the end entity certificate. For a format of the list, refer to step S705. Details are not described herein again. If the second certificate signing entity publishes the list to another function entity after signing the list, the second certificate signing entity sends a third update request message to a function entity that maintains the list, to request to mark the status of the initial certificate as used. Optionally, the third update request message includes identification information of the initial certificate, for example, a serial number of the initial certificate. Optionally, the second certificate signing entity may periodically send the third update request message, for example, send the third update request message every hour, one day, or one week; or the second certificate signing entity may send the third update request message each time an initial certificate is used. Correspondingly, after receiving the third update request message from the second certificate signing entity, the function entity that maintains the list updates a locally stored list, and adds the identification information of the initial certificate to the list.

In another possible implementation, the second certificate signing entity sends a fourth update request message to a server that maintains a list, to request to mark the status of the initial certificate as used, where the fourth update request message may include identification information of the initial certificate. Correspondingly, after receiving the fourth update request message from the second certificate signing entity, the server that maintains the list marks the status of the initial certificate as used.

It should be noted that the method 700 is also applicable to a network architecture in which a certificate enrollment entity is independently deployed and a network architecture in which a certificate management NF entity exists in a security domain shown in FIG. 5. For a specific implementation, refer to the method 400. Details are not described herein again.

In this embodiment of this application, when determining that the status of the initial certificate is not marked as used, the second certificate signing entity signs the end entity certificate for the NF entity, and marks the status of the initial certificate as used after signing the end entity certificate. In this way, when an attacker or a malicious network function entity requests an end entity certificate from the second certificate signing entity by using the initial certificate used by the NF entity, the second certificate signing entity determines that the status of the initial certificate is marked as used, and refuses to sign the end entity certificate, to prevent the attacker or the malicious network function entity from using the end entity certificate signed by the second certificate signing entity to counterfeit the NF entity to communicate with another NF entity in a network, and stealing information from the another NF entity, thereby improving network communication security.

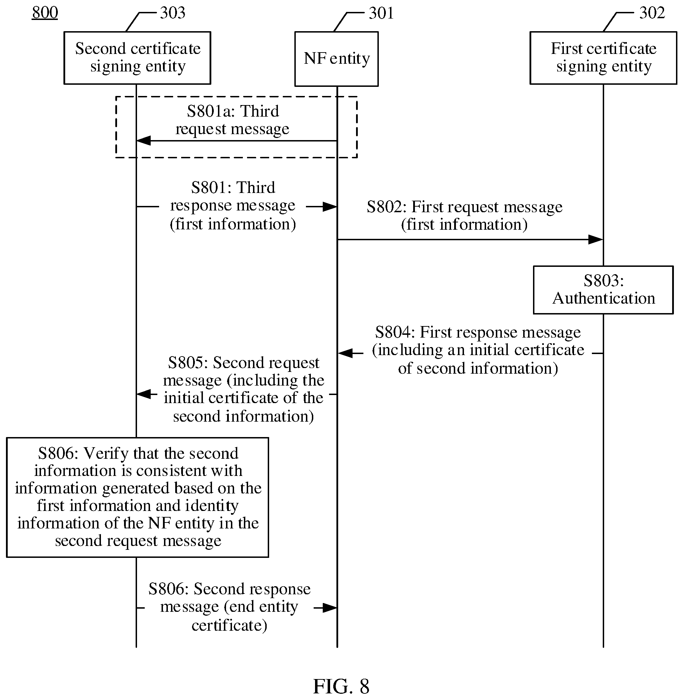

FIG. 8 is a schematic flowchart of yet another communication method 800 according to an embodiment of this application. The method may be applied to a scenario in which the NF entity 301, the first certificate signing entity 302, and the second certificate signing entity 303 shown in FIG. 3 communicate with each other. A difference from the foregoing methods 400, 600, and 700 lies in that in the method 800, a second certificate signing entity provides first information; a first certificate signing entity generates second information based on the first information and identity information of an NF entity, and includes the second information in a signed initial certificate; and the second certificate signing entity verifies the second information included in the initial certificate used by the NF entity to request an end entity certificate, and signs the end entity certificate for the NF entity when the verification succeeds. According to the method, network communication security can be improved. As shown in FIG. 8, the method includes the following plurality of steps.

S801: The second certificate signing entity sends a third response message to the NF entity, where the third response message includes the first information.

Optionally, the first information is a random number.

Optionally, before the second certificate authority entity sends the third response message to the NF entity, the method provided in this embodiment further includes:

S801a: The NF entity sends a third request message to the second certificate signing entity, where the third request message is used to trigger the second certificate signing entity to provide the first information.

Optionally, the third request message may include the identity information of the NF entity, or may include identification information of a current session between the NF entity and the second certificate signing entity, for example, a session ID (session ID), so that a receiver determines verification before the provided first information is used to sign a specific end entity certificate.

Correspondingly, the second certificate signing entity may establish a correspondence between the first information and the identity information of the NF entity or the session ID, so that before signing the end entity certificate for the NF entity, the second certificate signing entity determines to use the first information for verification.

S802: The NF entity sends a first request message to the first certificate signing entity, where the first request message is used to request the initial certificate, and the initial certificate includes the first information.

For a specific implementation, refer to step S401. Details are not described herein again.

S803: The first certificate signing entity performs verification on an identity of the NF entity based on the first request message, for example, the identity information of the NF entity in the message, to obtain a verification result.

S804: The first certificate signing entity sends a first response message to the NF entity based on the verification result.

If the verification result is that the verification succeeds, the first certificate signing entity signs an initial certificate for the NF entity, and includes the initial certificate and a certificate chain of the first certificate signing entity in the first response message, where the initial certificate includes the second information, and the second information is used for verification before the second certificate signing entity signs an end entity certificate for the NF entity. For example, the first certificate signing entity may include the second information in a subject alternative name (subjectAltName) field or a subject unique identifier (subjectUniqueID) field of the initial certificate.

If the verification result is that the verification fails, the first certificate signing entity refuses to sign an initial certificate for the NF entity, and indicates, in the first response message sent to the NF entity, that the request for the initial certificate fails. Optionally, the first response message includes a failure cause or a bit string corresponding to the failure cause, and a correspondence between a failure cause and a bit string may be specified in a protocol.

Optionally, the second information is information generated based on the first information and the identity information of the NF entity. For example, the first information and the identity information of the NF entity are input into an algorithm to obtain the second information. The algorithm may be defined in a protocol, or may be determined by the first certificate signing entity and the second certificate signing entity through negotiation. A specific negotiation manner includes but is not limited to the following manner 6.1 or 6.2.

Manner 6.1: Before step S805, the method provided in this embodiment further includes: The second certificate signing entity indicates an algorithm used by the first certificate signing entity to calculate the second information, for example, may indicate an algorithm identifier, where a correspondence between an algorithm and an algorithm identifier may be defined in a protocol.

Manner 6.2: In step S802, the third response message sent by the second certificate signing entity to the NF entity further includes an algorithm used to calculate the second information, for example, includes an algorithm identifier. In step S803, the first request message sent by the NF entity to the first certificate signing entity includes an algorithm in the third response message, for example, an algorithm identifier. A correspondence between an algorithm and an algorithm identifier may be defined in a protocol.

That the first certificate signing entity signs an initial certificate for the NF entity includes: The first certificate signing entity signs certificate data (tbsCertificate) by using a private key of the first certificate signing entity to obtain a signature of the first certificate signing entity, and obtains the initial certificate based on the certificate data and the signature of the first certificate signing entity. The certificate data includes the second information, the identity information of the NF entity, a first public key, and identity information of the first certificate signing entity. For a specific implementation, refer to step S403. Details are not described herein again.

Optionally, the initial certificate further includes first usage information, where the first usage information indicates a purpose of an end entity certificate that the initial certificate can be used to request, or may indicate a type of an end entity certificate that the initial certificate can be used to request. For example, a value of the first usage information may be a TLS client entity certificate, a TLS server entity certificate, an authorized access token signature certificate, a certificate for encrypting an HTTP message between SEPPs, or a certificate for signing a CCA token.

S805: The NF entity sends a second request message to the second certificate signing entity based on the first response message, where the second request message is used to request an end entity certificate, the second request message includes an initial certificate, and the initial certificate includes second information.

For a specific implementation, refer to step S404. Details are not described herein again.

S806: The second certificate signing entity sends a second response message to the NF entity based on the second request message.

For example, when the second request message meets a first condition, and the second information in the second request message is consistent with information generated by the second certificate signing entity based on the first information and the identity information of the NF entity in the second request message, the second certificate signing entity signs an end entity certificate for the NF entity. The second response message includes third data and a signature that is on the third data and that is obtained by the second certificate signing entity by using a private key of the second certificate signing entity, and the third data includes the end entity certificate and a certificate chain of the second certificate signing entity.

For another example, if the second request message does not meet a first condition, the second certificate signing entity refuses to sign an end entity certificate for the NF entity, and indicates, in the second response message sent to the NF entity, that the request for the end entity certificate fails. Optionally, the second response message may include a failure cause or a bit string corresponding to the failure cause, and a correspondence between a failure cause and a bit string may be specified in a protocol.

Optionally, before the second certificate signing entity generates the information based on the first information and the identity information of the NF entity, the method provided in this embodiment of this application further includes: The second certificate signing entity determines, based on the identity information of the NF entity or a current session ID, the first information used to verify consistency. For example, the second certificate signing entity may determine, based on the correspondence that is between the first information and the identity information of the NF entity or the session ID and that is established by the second certificate signing entity, the first information used to verify consistency.

For the first condition, refer to step S405. Details are not described herein again.

Optionally, the first condition may further include that identity information of the NF entity that is included in the second request message is consistent with the identity information of the NF entity that is included in the initial certificate. Optionally, the first condition may further include that the first usage information included in the initial certificate is consistent with the second usage information included in the second request message. For a specific implementation, refer to step S405. Details are not described herein again.

Optionally, the second certificate signing entity may input the first information and the identity information of the NF entity into an algorithm, to determine whether information generated based on the algorithm is consistent with the second information in the second request message. The algorithm is the same as the algorithm used by the first certificate signing entity in step S805. The algorithm may be defined in a protocol, or may be determined by the first certificate signing entity and the second certificate signing entity through negotiation. A specific negotiation method may include but is not limited to the manner 6.1 or 6.2.

It should be noted that the method 800 is also applicable to a network architecture in which a certificate enrollment entity is independently deployed. For a specific implementation, refer to the method 400. Details are not described herein again.

The method 800 is further applicable to a network architecture in which a certificate management NF entity 305 exists in the security domain 304 shown in FIG. 5. In the network architecture, steps S801, S802, S804, S805, and S806 may be replaced with steps S801b, S801c, S802a, S804a, S805a, and S806a.

S801b: The second certificate signing entity sends a third response message through the certificate management NF entity, where the third response message includes the first information.

S801c: The NF entity sends a third request message to the second certificate signing entity through the certificate management NF entity, or the certificate management NF entity sends a third request message to the second certificate signing entity on behalf of the NF entity, to trigger the second certificate signing entity to provide the first information.

In an implementation, the NF entity generates the third request message, and sends the third request message to the certificate management NF, and the certificate management NF forwards the third request message to the second certificate signing entity.

In another implementation, the NF indicates that the certificate management NF needs to request an end entity certificate, and the certificate management NF generates the third request message, and sends the third request message to the second certificate signing entity.

Optionally, the third request message may include the identity information of the NF entity, or may include identification information of a current session between the NF entity and the second certificate signing entity, for example, a session ID (session ID), so that a receiver determines verification before the provided first information is used to sign a specific end entity certificate.

S802a: The NF entity sends a first request message to the first certificate signing entity through the certificate management NF entity, or the certificate management NF entity sends a first request message to the first certificate signing entity on behalf of the NF entity, where the first request message is used to request an initial certificate, and the initial certificate includes first information.

For a specific implementation, refer to step S401b. Details are not described herein again.

S804a: The first certificate signing entity sends a first response message to the NF entity based on a verification result through the certificate management NF entity.

S805a: The NF entity sends a second request message to the second certificate signing entity based on the first response message through the certificate management NF entity, or the certificate management NF entity sends a first request message to the first certificate signing entity on behalf of the NF entity, where the second request message is used to request an end entity certificate, the second request message includes an initial certificate, and the initial certificate includes second information.

For a specific implementation, refer to steps S805 and S401b. Details are not described herein again.

S806a: The second certificate signing entity sends a second response message to the NF entity based on the second request message through the certificate management NF entity.

In the foregoing embodiment, the second certificate signing entity provides the first information; the first certificate signing entity generates the second information based on the first information and the identity information of the NF entity, and includes the second information in the signed initial certificate; and the second certificate signing entity verifies the second information included in the initial certificate used by the NF entity to request the end entity certificate, and signs the end entity certificate for the NF entity when the verification succeeds. In the foregoing manner, the initial certificate of the NF entity includes the second information, and the second information is generated based on the identity information of the NF entity and the first information provided by the second certificate signing entity for the NF entity or the current session ID. If an attacker or a malicious network function entity requests an end entity certificate from the second certificate signing entity by using the initial certificate of the NF entity, the second certificate signing entity generates information based on the first information and identity information forged by the attacker or identity information of the malicious network function entity that is included in the second request message. Because the information is inconsistent with the second information in the initial certificate, the second certificate signing entity refuses to sign the end entity certificate, to prevent the attacker from using the end entity certificate signed by the second certificate signing entity to counterfeit the NF entity to communicate with another NF entity in a network, and stealing information from the another NF entity, thereby improving network communication security.

The foregoing describes, in detail with reference to FIG. 1 to FIG. 8, the communication methods provided in embodiments of this application. The foregoing communication methods are mainly described from the perspective of interaction between network entities. It may be understood that, to implement the foregoing functions, a network entity includes a corresponding hardware structure and/or software module for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

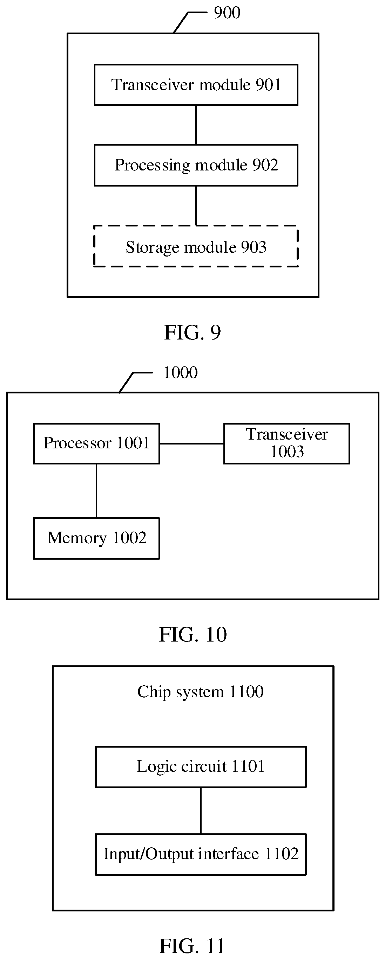

The following describes, in detail with reference to FIG. 9 to FIG. 11, communication apparatuses provided in this application. It should be understood that descriptions of the apparatus embodiments correspond to the descriptions of the method embodiments. Therefore, for content that is not described in detail, refer to the foregoing method embodiments. For brevity, some content is not described again.

In embodiments of this application, functional modules of a transmitter device or a receiver device may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation. Descriptions are provided below by using an example in which each functional module is obtained through division based on each corresponding function.

FIG. 9 is a schematic block diagram of a communication apparatus 900 according to an embodiment of this application. The apparatus 900 includes a transceiver module 901 and a processing module 902. The transceiver module 901 may implement a corresponding communication function. The processing module 902 is configured to perform data processing. In other words, the transceiver module 901 is configured to perform receiving and sending related operations. The processing module 902 is configured to perform operations other than receiving and sending. The transceiver module 901 may also be referred to as a communication interface or a communication unit.

Optionally, the apparatus 900 may further include a storage module 903. The storage module 903 may be configured to store instructions and/or data. The processing module 902 may read the instructions and/or the data in the storage module, so that the apparatus implements actions of a device in the foregoing method embodiments.

In a design, the apparatus 900 may correspond to the first certificate signing entity in the foregoing method embodiments, or may be a component (for example, a chip) of the first certificate signing entity.

The apparatus 900 may implement a corresponding step or procedure performed by the first certificate signing entity in the foregoing method embodiments. The transceiver module 901 may be configured to perform receiving and sending related operations of the first certificate signing entity in the foregoing method embodiments. The processing module 902 may be configured to perform a processing related operation of the first certificate signing entity in the foregoing method embodiments.

For example, the transceiver module 901 in the apparatus 900 is configured to learn that a network function entity requests an initial certificate, and the processing module 902 is configured to sign the initial certificate for the network function entity. The transceiver module 901 is configured to learn that the network function entity or another function entity requests to revoke the initial certificate, and the processing module 902 is further configured to record a status in which the initial certificate can be queried as revoked.

In a possible implementation, the transceiver module 901 is configured to receive a first request message from a network function entity, where the first request message includes identity information of the network function entity and first information. The processing module 902 is configured to sign an initial certificate for the network function entity, where the initial certificate includes second information, and the second information is information generated based on the first information and the identity information of the network function entity, and is used for verification performed before a second certificate signing entity signs an end entity certificate for the network function entity.

When the apparatus 900 is configured to perform the method in FIG. 4, the transceiver module 901 may be configured to perform steps of receiving and sending information in the method, for example, steps S401, S403, and S406; and the processing module 902 may be configured to perform a processing step in the method, for example, step S402.

When the apparatus 900 is configured to perform the method in FIG. 6, the transceiver module 901 may be configured to perform steps of receiving and sending information in the method, for example, steps S601, S603, and S607; and the processing module 902 may be configured to perform a processing step in the method, for example, step S602.

When the apparatus 900 is configured to perform the method in FIG. 7, the transceiver module 901 may be configured to perform steps of receiving and sending information in the method, for example, steps S701 and S703; and the processing module 902 may be configured to perform a processing step in the method, for example, step S702.

When the apparatus 900 is configured to perform the method in FIG. 8, the transceiver module 901 may be configured to perform steps of receiving and sending information in the method, for example, steps S802 and S804; and the processing module 902 may be configured to perform a processing step in the method, for example, step S803.

It should be understood that a specific process in which the units perform the foregoing corresponding steps is described in detail in the foregoing method embodiments. For brevity, details are not described herein again.

In another design, the apparatus 900 may correspond to the NF entity in the foregoing method embodiments, or may be a component (for example, a chip) of the NF entity.

The apparatus 900 may implement a corresponding step or procedure performed by the NF entity in the foregoing method embodiments. The transceiver module 901 may be configured to perform receiving and sending related operations of the NF entity in the foregoing method embodiments. The processing module 902 may be configured to perform a processing related operation of the NF entity in the foregoing method embodiments.

In a possible implementation, the transceiver module 901 is configured to obtain an initial certificate from a certificate signing entity, and the transceiver module 901 or the processing module 902 is configured to: after requesting an end entity certificate based on the initial certificate, trigger the certificate signing entity to record a status of the initial certificate as revoked.

In another possible implementation, the transceiver module 901 is configured to receive first information from a second certificate signing entity. The transceiver module 901 is further configured to send a request message to a first certificate signing entity, where the request message is used to request an initial certificate, and the request message includes identity information of the network function entity and the first information. The transceiver module 901 is further configured to receive, from the first certificate signing entity, an initial certificate signed by the first certificate signing entity for the network function entity, where the initial certificate includes second information, and the second information is information generated based on the first information and the identity information of the network function entity, and is used for verification performed before the second certificate signing entity signs an end entity certificate for the network function entity. The transceiver module 901 is further configured to send, to the second certificate signing entity, a message used to request the end entity certificate, where the message includes the initial certificate. The transceiver module 901 is further configured to receive the end entity certificate from the second certificate signing entity.

When the apparatus 900 is configured to perform the method in FIG. 4, the transceiver module 901 may be configured to perform steps of receiving and sending information in the method, for example, steps S401, S403, S404, and S405; and the processing module 902 may be configured to perform a processing step in the method.

When the apparatus 900 is configured to perform the method in FIG. 6, the transceiver module 901 may be configured to perform steps of receiving and sending information in the method, for example, steps S601, S603, S604, S605, and S606; and the processing module 902 may be configured to perform a processing step in the method.

When the apparatus 900 is configured to perform the method in FIG. 7, the transceiver module 901 may be configured to perform steps of receiving and sending information in the method, for example, steps S701, S703, S704, S705, and S706; and the processing module 902 may be configured to perform a processing step in the method.

When the apparatus 900 is configured to perform the method in FIG. 8, the transceiver module 901 may be configured to perform steps of receiving and sending information in the method, for example, steps S801a, S801, S802, S804, S805, and S806; and the processing module 902 may be configured to perform a processing step in the method.

It should be understood that a specific process in which the units perform the foregoing corresponding steps is described in detail in the foregoing method embodiments. For brevity, details are not described herein again.

In still another design, the apparatus 900 may correspond to the second certificate signing entity in the foregoing method embodiments, or may be a component (for example, a chip) of the second certificate signing entity.

The apparatus 900 may implement a corresponding step or procedure performed by the second certificate signing entity in the foregoing method embodiments. The transceiver module 901 may be configured to perform receiving and sending related operations of the second certificate signing entity in the foregoing method embodiments. The processing module 902 may be configured to perform a processing related operation of the second certificate signing entity in the foregoing method embodiments.

In a possible implementation, the transceiver module 901 is configured to receive a request message from a network function entity, where the request message includes an initial certificate signed by a first certificate signing entity for the network function entity and identity information of the network function entity, and the first certificate signing entity is a trusted entity of the second certificate signing entity. The processing module 902 is configured to: verify consistency between the initial certificate signed by the first certificate signing entity for the network function entity and the identity information of the network function entity, and sign an end entity certificate for the network function entity when a verification result is that the verification succeeds.

When the apparatus 900 is configured to perform the method in FIG. 4, the transceiver module 901 may be configured to perform steps of receiving and sending information in the method, for example, steps S404 and S405; and the processing module 902 may be configured to perform a processing step in the method.

When the apparatus 900 is configured to perform the method in FIG. 6, the transceiver module 901 may be configured to perform steps of receiving and sending information in the method, for example, steps S604, S605, S606, and S607; and the processing module 902 may be configured to perform a processing step in the method.

When the apparatus 900 is configured to perform the method in FIG. 7, the transceiver module 901 may be configured to perform steps of receiving and sending information in the method, for example, steps S704, S705, and S706; and the processing module 902 may be configured to perform processing steps S705 and S707 in the method.

It should be understood that a specific process in which the units perform the foregoing corresponding steps is described in detail in the foregoing method embodiments. For brevity, details are not described herein again.

It should be further understood that the apparatus 900 herein is presented in a form of a functional module. The term "module" herein may be an application-specific integrated circuit (application-specific integrated circuit, ASIC), an electronic circuit, a processor (like a shared processor, a dedicated processor, or a group processor) configured to execute one or more software or firmware programs, a memory, a combinational logic circuit, and/or another suitable component that supports the described function. In an optional example, a person skilled in the art may understand that the apparatus 900 may be specifically the first certificate signing entity in the foregoing embodiments, and may be configured to perform procedures and/or steps corresponding to the first certificate signing entity in the foregoing method embodiments; or the apparatus 900 may be specifically the network function entity in the foregoing embodiments, and may be configured to perform procedures and/or steps corresponding to the network function entity in the foregoing method embodiments. To avoid repetition, details are not described herein again.

The apparatus 900 in the foregoing solutions has a function of implementing corresponding steps performed by the network entities (such as the first certificate signing entity, the network function entity, and the second certificate signing entity) in the foregoing methods. The function may be implemented by hardware, or may be implemented by hardware executing corresponding software. The hardware or software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and a related processing operation in the method embodiments.

In addition, the transceiver module 901 may be a transceiver circuit (for example, may include a receiver circuit and a transmitter circuit), and the processing module 902 may be a processing circuit.

FIG. 10 is a diagram of another communication apparatus 1000 according to an embodiment of this application. The apparatus 1000 includes a processor 1001. The processor 1001 is configured to: execute a computer program or instructions stored in a memory 1002, or read data/signaling stored in the memory 1002, to perform the methods in the foregoing method embodiments. Optionally, there are one or more processors 1001.

Optionally, as shown in FIG. 10, the apparatus 1000 further includes the memory 1002, and the memory 1002 is configured to store the computer program or the instructions and/or the data. The memory 1002 may be integrated with the processor 1001, or may be disposed separately. Optionally, there are one or more memories 1002.

Optionally, as shown in FIG. 10, the apparatus 1000 further includes a transceiver 1003, and the transceiver 1003 is configured to: receive and/or send a signal. For example, the processor 1001 is configured to control the transceiver 1003 to receive and/or send a signal.

In a solution, the apparatus 1000 is configured to implement operations performed by the first certificate signing entity in the foregoing method embodiments.

In another solution, the apparatus 1000 is configured to implement operations performed by the network device in the foregoing method embodiments.

In still another solution, the apparatus 1000 is configured to implement operations performed by the second certificate signing entity in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any memory of another suitable type.

FIG. 11 is a diagram of a chip system 1100 according to an embodiment of this application. The chip system 1100 (or may be referred to as a processing system) includes a logic circuit 1101 and an input/output interface (input/output interface) 1102.

The logic circuit 1101 may be a processing circuit in the chip system 1100. The logic circuit 1101 may be coupled and connected to a storage unit, and invoke instructions in the storage unit, so that the chip system 1100 can implement the methods and functions in embodiments of this application. The input/output interface 1102 may be an input/output circuit in the chip system 1100, and outputs information processed by the chip system 1100, or inputs to-be-processed data or signaling information to the chip system 1100 for processing.

In a solution, the chip system 1100 is configured to implement operations performed by the first certificate signing entity, the network function entity, or the second certificate signing entity in the foregoing method embodiments.

For example, the logic circuit 1101 is configured to implement a processing related operation performed by the first certificate signing entity, the network function entity, or the second certificate signing entity in the foregoing method embodiments; and the input/output interface 1102 is configured to implement a sending and/or receiving related operation performed by the first certificate signing entity, the network function entity, or the second certificate signing entity in the foregoing method embodiments.

An embodiment of this application further provides a computer-readable storage medium. The computer-readable storage medium stores computer instructions used to implement the method performed by the first certificate signing entity, the network function entity, or the second certificate signing entity in the foregoing method embodiments.

For example, when the computer program is executed by a computer, the computer is enabled to implement the method performed by the first certificate signing entity, the network function entity, or the second certificate signing entity in the foregoing method embodiments.

An embodiment of this application further provides a computer program product, including instructions. When the instructions are executed by a computer, the method performed by the first certificate signing entity, the network function entity, or the second certificate signing entity in the foregoing method embodiments is implemented.

An embodiment of this application further provides a communication system, including the foregoing first certificate signing entity, network function entity, and second certificate signing entity.

Optionally, the communication system further includes a first certificate enrollment entity, a certificate management NF entity, and a second certificate enrollment entity.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line (DSL)) or a wireless manner (for example, infrared, radio, or microwave). The computer-readable storage medium may be any usable medium that can be accessed by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium includes but is not limited to any medium that can store program code, such as a USB flash drive, a removable hard disk, a read-only memory (read-only memory, ROM), a random access memory (random access memory, RAM), a magnetic disk, or an optical disc.

For ease of understanding of embodiments of this application, the following descriptions are provided.

First, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in embodiments of this application, "at least one" refers to one or more, and "a plurality of" refers to two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between associated objects.

Third, in embodiments of this application, "first", "second", and various numerical numbers (for example, #1 and #2) are merely used for distinguishing for ease of description, but are not intended to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described.

Fourth, in embodiments of this application, descriptions such as "when...", "in a case of...", and "if" all mean that a device performs corresponding processing in an objective case, and do not limit time, and the device is not required to perform a determining action during implementation. This does not mean that there is another limitation.

Fifth, in embodiments of this application, the terms "include", "have", and any variants thereof are intended to cover non-exclusive inclusion. For example, a process, method, system, product, or device including a series of steps or units is not necessarily limited to those clearly listed steps or units, but may include other steps or units that are not clearly listed or are inherent to the process, method, product, or device.

Sixth, in embodiments of this application, "indicate" may include "directly indicate" and "indirectly indicate". When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication through signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in embodiments of this application, the "protocol" may be a standard protocol in the communication field, for example, may include a 5G protocol, a new radio (new radio, NR) protocol, and a related protocol applied to a future communication system. This is not limited in this application.

Eighth, in embodiments of this application, "storage" may refer to being stored in one or more memories. The one or more memories may be separately disposed, or may be integrated in an encoder, a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Ninth, in embodiments of this application, "communication" may also be described as "data transmission", "information transmission", "data processing", or the like. The "transmission" includes "sending" and "receiving". This is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a second entity, a request message from a network function entity, wherein the request message comprises an initial certificate signed by a first entity for the network function entity and identity information of the network function entity, and the first entity is a trusted entity of the second entity;
verifying consistency between the initial certificate signed by the first entity for the network function entity and the identity information of the network function entity; and
signing an end entity certificate for the network function entity when a verification result is that the verification succeeds.

2. The method according to claim 1, wherein the identity information of the network function entity is an instance identifier of the network function entity.

3. The method according to claim 1 or 2, wherein that the first entity is a trusted entity of the second entity comprises:
a root certificate of the first entity is stored in the second entity.

4. The method according to any one of claims 1 to 3, wherein the first entity and the second entity are different certificate authorities CAs.

5. The method according to any one of claims 1 to 4, wherein the initial certificate signed by the first entity for the network function entity comprises identity information of the network function entity, and the verifying consistency between the initial certificate signed by the first entity for the network function entity and the identity information of the network function entity comprises:
verifying whether the identity information of the network function entity that is comprised in the initial certificate is consistent with the identity information of the network function entity that is comprised in the request message.

6. The method according to any one of claims 1 to 5, wherein the initial certificate further comprises usage information, and the usage information indicates a purpose of an end entity certificate that the initial certificate can be used to request.

7. The method according to claim 6, wherein the request message further comprises second usage information, the second usage information indicates a purpose of the end entity certificate requested by the network function entity, and the method further comprises:
verifying consistency between the usage information and the second usage information; and
the signing an end entity certificate for the network function entity when a verification result is that the verification succeeds comprises:
signing the end entity certificate for the network function entity when the verification result is that the verification succeeds, and a verification result of the consistency between the usage information and the second usage information is that the verification succeeds.

8. The method according to any one of claims 1 to 7, wherein the method further comprises:
sending, by the second entity, a revocation request message to the first entity, wherein the revocation request message is used to request to revoke the initial certificate.

9. The method according to claim 8, wherein before the sending, by the second entity, a revocation request message to the first entity, the method further comprises:
determining, by the second entity, an address of the first entity configured to revoke the initial certificate; and
sending, by the second entity, the revocation request message to the first entity based on the address.

10. The method according to claim 8, wherein the sending, by the second entity, a revocation request message to the first entity comprises:
sending, by the second entity, the revocation request message to the first entity through another function entity, wherein the another function entity is configured to: determine an address of the first entity based on identity information of the first entity that is provided by the second entity, and forward the revocation request message from the second entity to the first entity based on the address of the first entity.

11. The method according to any one of claims 8 to 10, wherein before the sending, by the second entity, a revocation request message to the first entity, the method further comprises:
signing, by the second entity, the revocation request message, for the first entity to verify the second entity.

12. The method according to any one of claims 8 to 11, wherein before the sending, by the second entity, a revocation request message to the first entity, the method further comprises:
receiving, by the second entity, a response message from the network function entity, wherein the response message indicates that the network function entity has completed enrollment of the end entity certificate.

13. The method according to any one of claims 1 to 12, wherein after the signing an end entity certificate for the network function entity, the method further comprises:
marking, by the second entity, a status of the initial certificate as used.

14. The method according to claim 13, wherein the marking, by the second entity, a status of the initial certificate as used comprises:
adding, by the second entity, a serial number of the initial certificate to a list, wherein the list comprises a serial number of an initial certificate used by the second entity to sign an end entity certificate.

15. The method according to claim 14, wherein the second entity allows another network entity to query the list.

16. The method according to any one of claims 13 to 15, wherein the signing an end entity certificate for the network function entity when a verification result is that the verification succeeds comprises:
signing the end entity certificate for the network function entity when the verification result is that the verification succeeds, and it is determined that the status of the initial certificate is not marked as used.

17. The method according to any one of claims 1 to 7, wherein the initial certificate further comprises second information, the second information is information generated by the first entity based on first information and the identity information of the network function entity, and the method further comprises:
sending, by the second entity, the first information to the network function entity, so that the initial certificate signed by the first entity for the network function entity comprises the second information; and
the signing an end entity certificate for the network function entity when a verification result is that the verification succeeds comprises:
signing the end entity certificate for the network function entity when the verification result is that the verification succeeds, and the second information comprised in the initial certificate is consistent with the information generated by the second entity based on the first information and the identity information of the network function entity.

18. The method according to claim 17, wherein before the sending, by the second entity, the first information to the network function entity, the method comprises:
learning, by the second entity, that the network function entity requests an end entity certificate, and allocating the first information to the network function entity.

19. The method according to claim 17 or 18, wherein the sending, by the second entity, the first information to the network function entity comprises:
sending, by the second entity, the first information to the network function entity via a certificate management network function entity.

20. A communication method, comprising:
sending, by a network function entity, a request message to a second entity, wherein the request message comprises an initial certificate signed by a first entity for the network function entity and identity information of the network function entity, and the first entity is a trusted entity of the second entity;
receiving, by the second entity, the request message from the network function entity, verifying consistency between the initial certificate signed by the first entity for the network function entity and the identity information of the network function entity, and signing an end entity certificate for the network function entity when a verification result is that the verification succeeds; and
receiving, by the network function entity, the end entity certificate from the second entity.

21. An apparatus, comprising a module configured to implement the method according to any one of claims 1 to 19.

22. An apparatus, comprising a processor, a memory, and a transceiver, wherein the memory is configured to store instructions, when the instructions are used by the processor, the processor is configured to implement the method according to any one of claims 1 to 19, and the transceiver is configured to: receive and/or send a signal.

23. A computer-readable storage medium, wherein the computer-readable storage medium stores instructions, and when the instructions are run on a computer, the computer is enabled to perform the method according to any one of claims 1 to 19.

24. A computer program product comprising instructions, wherein when the instructions are run on a computer, the computer is enabled to perform the method according to any one of claims 1 to 19.

25. A communication system, comprising:
an apparatus configured to implement the method according to any one of claims 1 to 19 and a network function entity, wherein
the network function entity is configured to send a request message to a second entity; and
the network function entity is further configured to receive an end entity certificate from the second entity.
